# EUROPEAN PATENT APPLICATION

(11) **EP 4 366 200 A1**
(43) Date of publication of application: **08.05.2024**
(21) Application number: 22845106.8
(22) Date of filing: 29.06.2022
(51) Int. Cl.: H04L 1/00

(54) **RADIO FRAME SENDING METHOD AND APPARATUS, AND RADIO FRAME RECEIVING METHOD AND APPARATUS**

(30) Priority: 21.07.2021 CN 202110826539
(71) Applicant: Huawei Technologies Co., Ltd., Longgang Shenzhen, Guangdong 518129 (CN)
(72) Inventor: GUO, Yuchen, Shenzhen, Guangdong 518129 (CN); LI, Yiqing, Shenzhen, Guangdong 518129 (CN); HUANG, Guogang, Shenzhen, Guangdong 518129 (CN); LI, Yunbo, Shenzhen, Guangdong 518129 (CN); GAN, Ming, Shenzhen, Guangdong 518129 (CN)
(74) Representative: Körber, Martin Hans
(86) International application number: PCT/CN2022/102304
(87) International publication number: WO 2023/000941

(57) **Abstract**

Embodiments of this application provide a radio frame sending method and apparatus, and a radio frame receiving method and apparatus, to carry station information of a multi-link station device in a manner in which a plurality of MLEs of a radio frame carry station information of a same link. This avoids a radio frame transmission failure and improves communication efficiency. In the method, a multi-link device generates a radio frame, where the radio frame includes a first multi-link element MLE and a second MLE, the first MLE includes a first information element, the second MLE includes a second information element, and the first information element and the second information element correspond to station information of a same link. Then, the multi-link device sends the radio frame. This application is applied to a wireless local area network system supporting next-generation Wi-Fi protocols of the IEEE 802.11ax, for example, the 802.11 series protocols such as the 802. 11be or the EHT.

## Description

This application claims priority to Chinese Patent Application No. 202110826539.2, filed with China National Intellectual Property Administration on July 21, 2021 and entitled "RADIO FRAME SENDING METHOD AND APPARATUS, AND RADIO FRAME RECEIVING METHOD AND APPARATUS", which is incorporated herein by reference in its entirety.

### TECHNICAL FIELD

This application relates to the field of wireless local area network (wireless local area network, WLAN) technologies, and in particular, to a radio frame sending method and apparatus, and a radio frame receiving method and apparatus.

### BACKGROUND

With development of wireless technologies, more wireless devices support multi-link communication. For example, the devices support simultaneous communication on 2.4 gigahertz (GHz), 5 GHz, and 6 GHz frequency bands, or support simultaneous communication on different channels of a same frequency band. This improves a communication rate between devices. Such devices are generally referred to as multi-link devices (multi-link device, MLD). The multi-link devices may be multi-link access point devices or multi-link station devices.

Currently, in a process of communication between the multi-link devices, one multi-link device may send a radio frame including a multi-link element (multi-link element, MLE) to another multi-link device. The MLE may be used to carry station information of the multi-link device. A maximum length of the information carried in the MLE is fixed, and the maximum length is configured by a length (Length) field in the MLE.

However, when a length of the station information of the multi-link device is large, the length of the station information, carried in the MLE, of the multi-link device may be greater than the maximum length configured for the MLE. Consequently, radio frame transmission fails because the MLE cannot carry the station information of the multi-link device, and communication efficiency is affected.

### SUMMARY

Embodiments of this application provide a radio frame sending method and apparatus, and a radio frame receiving method and apparatus, to carry station information of a multi-link station device in a manner in which a plurality of MLEs of a radio frame carry station information of a same link. This avoids a radio frame transmission failure and improves communication efficiency.

According to a first aspect, an embodiment of this application provides a radio frame sending method applied to WLAN communication. The method is performed by a multi-link device or some components (for example, a processor, a chip, or a chip system) in the multi-link device. In the method, the multi-link device generates a radio frame. The radio frame includes a first multi-link element MLE and a second MLE, the first MLE includes a first information element, the second MLE includes a second information element, and the first information element and the second information element correspond to station information of a same link. Then, the multi-link device sends the radio frame.

According to the technical solutions, the radio frame sent by the multi-link device includes the first MLE and the second MLE, and the first information element included in the first MLE and the second information element included in the second MLE correspond to the station information of the same link. In comparison with an implementation in which the radio frame fails to be transmitted because the station information of the multi-link device cannot be carried when a length of the station information, carried in a single MLE, of the multi-link device is greater than a maximum length configured by the MLE, the station information of the multi-link station device is carried in a manner in which a plurality of MLEs of a radio frame carry station information of a same link. This avoids a radio frame transmission failure and improves communication efficiency.

It should be noted that, that the first information element and the second information element correspond to the station information of the same link may also be expressed as that the first information element and the second information element correspond to different portions of the station information of the same link. In addition, the station information of the same link is fragmented into at least two portions. One portion of the station information of the link corresponds to the first information element (which is also referred to as that one portion of the station information of the link is carried in the first information element), and the other portion of the station information of the link corresponds to the second information element (which is also referred to as that the other portion of the station information of the link is carried in the second information element).

According to a second aspect, an embodiment of this application provides a radio frame receiving method applied to WLAN communication. The method is performed by a multi-link device or some components (for example, a processor, a chip, or a chip system) in the multi-link device. In the method, a multi-link device receives a radio frame. The radio frame includes a first multi-link element MLE and a second MLE, the first MLE includes a first information element, the second MLE includes a second information element, and the first information element and the second information element correspond to station information of a same link. Then, the multi-link device determines the station information based on the radio frame.

According to the technical solutions, the radio frame received by the multi-link device includes the first MLE and the second MLE, and the first information element included in the first MLE and the second information element included in the second MLE correspond to the station information of the same link. In comparison with an implementation in which the radio frame fails to be transmitted because the station information of the multi-link device cannot be carried when a length of the station information, carried in a single MLE, of the multi-link device is greater than a maximum length configured by the MLE, the station information of the multi-link station device is carried in a manner in which a plurality of MLEs of a radio frame carry station information of a same link. This avoids a radio frame transmission failure and improves communication efficiency.

According to a third aspect, an embodiment of this application provides a radio frame sending apparatus used in WLAN communication. The apparatus may specifically be a multi-link device or some components (for example, a processor, a chip, or a chip system) in the multi-link device. The apparatus includes a transceiver unit and a processing unit. The processing unit is configured to generate a radio frame. The radio frame includes a first multi-link element MLE and a second MLE, the first MLE includes a first information element, the second MLE includes a second information element, and the first information element and the second information element correspond to station information of a same link. The transceiver unit is configured to send the radio frame.

According to the technical solutions, the radio frame sent by the transceiver unit includes the first MLE and the second MLE, and the first information element included in the first MLE and the second information element included in the second MLE correspond to the station information of the same link. In comparison with an implementation in which the radio frame fails to be transmitted because the station information of the multi-link device cannot be carried when a length of the station information, carried in a single MLE, of the multi-link device is greater than a maximum length configured by the MLE, the station information of the multi-link station device is carried in a manner in which a plurality of MLEs of a radio frame carry station information of a same link. This avoids a radio frame transmission failure and improves communication efficiency.

According to a fourth aspect, an embodiment of this application provides a radio frame receiving apparatus used in WLAN communication. The apparatus may specifically be a multi-link device or some components (for example, a processor, a chip, or a chip system) in the multi-link device. The apparatus includes a transceiver unit and a processing unit. The transceiver unit is configured to receive a radio frame. The radio frame includes a first multi-link element MLE and a second MLE, the first MLE includes a first information element, the second MLE includes a second information element, and the first information element and the second information element correspond to station information of a same link. The processing unit is configured to determine the station information based on the radio frame.

According to the technical solutions, the radio frame received by the transceiver unit includes the first MLE and the second MLE, and the first information element included in the first MLE and the second information element included in the second MLE correspond to the station information of the same link. In comparison with an implementation in which the radio frame fails to be transmitted because the station information of the multi-link device cannot be carried when a length of the station information, carried in a single MLE, of the multi-link device is greater than a maximum length configured by the MLE, the station information of the multi-link station device is carried in a manner in which a plurality of MLEs of a radio frame carry station information of a same link. This avoids a radio frame transmission failure and improves communication efficiency.

In a possible implementation of any one of the first aspect to the fourth aspect in embodiments of this application, the first information element and the second information element each include a link identifier (Link ID) field, and a value of the link identifier field of the first information element is the same as a value of the link identifier field of the second information element.

According to the technical solutions, an information element may identify, by using a link identifier field included in the information element, a link on which station information carried in the information element is located. That the value of the link identifier field of the first information element is the same as the value of the link identifier field of the second information element may indicate that a link on which the station information carried in the first information element is located is the same as a link on which the station information carried in the second information element is located. Therefore, a same value of the link identifier fields indicates that the first information element and the second information element correspond to the station information of the same link.

In a possible implementation of any one of the first aspect to the fourth aspect in embodiments of this application, the first information element includes first indication information, and the first indication information indicates whether the station information is fragmented.

According to the technical solutions, the first information element may include the first indication information indicating whether the station information is fragmented, to indicate that station information, carried in the first information element, of a link is fragmented into at least two fragments, and at least one of the at least two fragments is carried in another information element (for example, the second information element). Therefore, the first indication information indicates that the first information element and the second information element correspond to the station information of the same link.

Optionally, the second information element includes the first indication information.

Optionally, the first indication information indicates whether the station information is fragmented.

Optionally, the first indication information indicates whether different fragments of the station information are carried in different information elements.

Optionally, the first indication information indicates that the station information is fragmented, and the station information of the first information element is a first fragment.

Optionally, the first indication information indicates that the station information is fragmented, and the station information of the first information element is a last fragment.

Optionally, the first indication information indicates that the station information is fragmented, and the station information of the first information element is an intermediate fragment (neither the first fragment nor the last fragment).

Optionally, the first indication information indicates that the station information is not fragmented.

In a possible implementation of any one of the first aspect to the fourth aspect in embodiments of this application, the first indication information is carried in a station control (STA control) information field of the first information element.

According to the technical solutions, the first indication information indicating whether the station information is fragmented may be carried in the station control field of the first information element, to provide a specific implementation of implementing the first indication information.

In a possible implementation of any one of the first aspect to the fourth aspect in embodiments of this application, the first information element includes second indication information, and the second indication information indicates a quantity of information elements that carry the station information.

According to the technical solutions, the first information element may include the second indication information indicating the quantity of information elements that carry the station information, to indicate that station information, carried in the first information element, of a link is carried in a plurality of information elements (at least including the second information element), and indicate a quantity of the plurality of information elements. Therefore, the second indication information indicates that the first information element and the second information element correspond to the station information of the same link.

Optionally, the second information element includes the second indication information.

Optionally, the second indication information indicates a quantity of fragments of the station information.

Optionally, the second indication information indicates a quantity of information elements that carry the station information, and the information elements that carry the station information include the first information element.

Optionally, the second indication information indicates a quantity of information elements that carry the station information, and the information elements that carry the station information do not include the first information element.

Optionally, the second indication information indicates a sequence number of the information element that carries the station information, and the sequence number is a forward sequence number.

Optionally, the second indication information indicates a sequence number of the information element that carries the station information, and the sequence number is a backward sequence number.

In a possible implementation of any one of the first aspect to the fourth aspect in embodiments of this application, the second indication information is carried in a station control field of the first information element.

According to the technical solutions, the second indication information indicating the quantity of information elements that carry the station information may be carried in the station control field of the first information element, to provide a specific implementation of implementing the second indication information.

In a possible implementation of any one of the first aspect to the fourth aspect in embodiments of this application, the second information element includes third indication information, and the third indication information indicates that the second information element is a last information element in a plurality of information elements that carry the station information.

According to the technical solutions, the second information element may include the third indication information indicating that the second information element is the last information element in the plurality of information elements that carry the station information, to indicate that station information, carried in the second information element, of a link is carried in a plurality of information elements (at least including the second information element), and that the second information element is the last information element in the plurality of information elements. Therefore, the third indication information indicates that the first information element and the second information element correspond to the station information of the same link.

Optionally, the third indication information indicates that there is no other information element that carries the station information after the second information element.

Optionally, the station information is fragmented into a plurality of fragments, and the third indication information indicates that a fragment, carried in the second information element, of the station information is a last fragment.

Optionally, the third indication information includes a non-inheritance field (non-inheritance element).

In a possible implementation of any one of the first aspect to the fourth aspect in embodiments of this application, the first information element and the second information element each include a complete profile (Complete Profile) field, and a value of the complete profile field of the first information element is the same as a value of the complete profile field of the second information element.

According to the technical solutions, an information element may indicate, by using a complete profile field included in the information element, a related profile of station information carried in the information element. That the value of the complete profile field of the first information element is the same as the value of the complete profile field of the second information element may indicate that a profile of station information carried in the first information element is the same as a profile of station information carried in the second information element. Therefore, a same value of the complete profile fields indicates that both the first information element and the second information element in the radio frame carry complete station information.

Optionally, the second information element does not include the complete profile field.

In a possible implementation of any one of the first aspect to the fourth aspect in embodiments of this application, the first information element includes a station information (STA Info) field, and the station information field indicates related station information of the first information element and related station information of the second information element.

According to the technical solutions, an information element may indicate, by using a station information field included in the information element, related station information carried in the information element. The station information field of the first information element not only indicates the related station information carried in the first information element, but also indicates the related station information carried in the second information element. Therefore, the station information field of the first information element indicates that the first information element and the second information element correspond to the station information of the same link.

In a possible implementation of any one of the first aspect to the fourth aspect in embodiments of this application, the second information element does not include a station information field; or the second information element includes the station information field, and a value of the station information field is a reserved (reserved) value.

According to the technical solutions, because the related station information of the second information element is indicated by the station information field of the first information element, the second information element may not carry the station information field, or the station information field of the second information element is set to a reserved value, to carry other information/data different from information in the station information field by using the reserved value. Therefore, the station information field of the first information element is reused to indicate the related station information of the plurality of information elements, to reduce overheads and further improve communication efficiency.

Optionally, the second information element includes a station information field.

In a possible implementation of any one of the first aspect to the fourth aspect in embodiments of this application, the station information field includes at least one of the following: a medium access control address present (medium access control address present, MAC Address Present) field, a beacon interval present (Beacon Interval Present) field, a delivery traffic indication message information present (delivery traffic indication message information present, DTIM Info Present) field, and a non-simultaneous transmit and receive link pair present (non-simultaneous transmit and receive link pair present, NSTR Link Pair Present) field.

According to the technical solutions, the station information field may specifically include at least one of the foregoing fields, to indicate related station information.

In a possible implementation of any one of the first aspect to the fourth aspect in embodiments of this application, an element type of the first information element is the same as an element type of the second information element.

According to the technical solutions, the element type of the first information element is the same as the element type of the second information element, that is, the station information of the same link is carried in a plurality of information elements of a same element type.

Optional, the first information element and the second information element each include a type field, and a value of the type field of the first information element is the same as a value of the type field of the second information element.

Optionally, the type field is a subelement identifier (subelement ID) field.

In a possible implementation of any one of the first aspect to the fourth aspect in embodiments of this application, an element type of the first information element is different from an element type of the second information element.

According to the technical solutions, the element type of the first information element is different from the element type of the second information element, that is, the station information of the same link is carried in a plurality of information elements of different element types.

In a possible implementation of any one of the first aspect to the fourth aspect in embodiments of this application, the first information element and the second information element each include a type field, and a value of the type field of the first information element is different from a value of the type field of the second information element.

According to the technical solutions, the type field of the information element indicates a type of the information element, and different values of the type field may indicate that the element type of the first information element is different from the element type of the second information element.

Optionally, the type field is a subelement identifier (subelement ID) field.

In a possible implementation of any one of the first aspect to the fourth aspect in embodiments of this application, in the radio frame, the first MLE and the second MLE are adjacent MLEs.

According to the technical solutions, the first MLE and the second MLE may be MLEs at adjacent locations in the radio frame. Compared with a manner in which station information of a same link is carried in MLEs that are not adjacent, a manner in which the station information of the same link is carried in a plurality of adjacent MLEs in the radio frame may help a receive end of the radio frame obtain the station information of the same link.

Optionally, in the radio frame, there is no other MLE between the first MLE and the second MLE.

Optionally, in the radio frame, the first MLE is located before the second MLE, or in the radio frame, the second MLE is located after the first MLE.

In a possible implementation of any one of the first aspect to the fourth aspect in embodiments of this application, the first MLE includes a common information field, and the common information field indicates multi-link common information of the first MLE and multi-link common information of the second MLE.

According to the technical solutions, an information element may indicate, by using a common information field included in the information element, multi-link common information carried in the information element. The common information field of the first information element not only indicates the multi-link common information carried in the first information element, but also indicates the multi-link common information carried in the second information element. Therefore, the common information field of the first information element indicates multi-link common information corresponding to the first information element and the second information element.

In a possible implementation of any one of the first aspect to the fourth aspect in embodiments of this application, the second MLE does not include a common information field; or the second MLE includes the common information field, and a value of the common information field of the second MLE is a reserved value.

According to the technical solutions, because the multi-link common information of the second information element is indicated by the common information field of the first information element, the second information element may not carry the common information field, or the common information field of the second information element is set to a reserved value, to carry other information/data different from information in the common information field by using the reserved value. Therefore, the common information field of the first information element is reused to indicate the multi-link common information of the plurality of information elements, to reduce overheads and further improve communication efficiency.

Optionally, the second information element includes a common information field.

In a possible implementation of any one of the first aspect to the fourth aspect in embodiments of this application, the first MLE includes a multi-link control field, and the multi-link control field indicates multi-link control information of the first MLE and multi-link control information of the second MLE.

According to the technical solutions, an information element may indicate, by using a multi-link control field included in the information element, multi-link control information carried in the information element. The multi-link control field of the first information element not only indicates the multi-link control information carried in the first information element, but also indicates the multi-link control information carried in the second information element. Therefore, the multi-link control field of the first information element indicates multi-link control information corresponding to the first information element and the second information element.

In a possible implementation of any one of the first aspect to the fourth aspect in embodiments of this application, the second MLE does not include a multi-link control field; or the second MLE includes the multi-link control field, and a value of a presence bitmap (Presence bitmap) field in the multi-link control field of the second MLE is all 0s.

According to the technical solutions, because the multi-link control information of the second information element is indicated by the multi-link control information field of the first information element, the second information element may not carry the multi-link control information field, or the multi-link control field of the second information element is set to a reserved value, to carry other information/data different from information in the multi-link control field by using the reserved value. Therefore, the multi-link control field of the first information element is reused to indicate the multi-link control information of the plurality of information elements, to reduce overheads and further improve communication efficiency.

Optionally, the second information element includes a common information field.

In a possible implementation of any one of the first aspect to the fourth aspect in embodiments of this application, the radio frame is an association request frame, a reassociation request frame, an association response frame, a reassociation response frame, or a probe response frame.

According to the technical solutions, in a plurality of implementations of the radio frame, the radio frame may carry the first MLE and the second MLE, and the first information element included in the first MLE and the second information element included in the second MLE correspond to the station information of the same link. Therefore, station information of a multi-link station device may be carried in different radio frames in a manner in which a plurality of MLEs of a radio frame carry station information of a same link, to improve communication efficiency.

According to a fifth aspect, an embodiment of this application provides a communication apparatus, including at least one processor. The at least one processor is coupled to a memory. The memory is configured to store a program or instructions. The at least one processor is configured to execute the program or the instructions, so that the apparatus implements the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect.

According to a sixth aspect, an embodiment of this application provides a computer-readable storage medium storing one or more computer-executable instructions. When the computer-executable instructions are executed by a processor, the processor performs the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect.

According to a seventh aspect, an embodiment of this application provides a computer program product (which is also referred to as a computer program) storing one or more computers. When the computer program product is executed by a processor, the processor performs the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect.

According to an eighth aspect, an embodiment of this application provides a chip system. The chip system includes at least one processor, configured to support a communication apparatus in implementing a function in any one of the first aspect or the possible implementations of the first aspect, a function in any one of the second aspect or the possible implementations of the second aspect, a function in any one of the third aspect or the possible implementations of the third aspect, or a function in any one of the fourth aspect or the possible implementations of the fourth aspect.

In a possible design, the chip system further includes a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

According to a ninth aspect, an embodiment of this application provides a communication system. The communication system includes the communication apparatus in the third aspect and the communication apparatus in the fourth aspect, and/or the communication system includes the communication apparatus in the fifth aspect.

For technical effects brought by any design in the fifth aspect to the ninth aspect, refer to the technical effects brought by different implementations in the first aspect to the fourth aspect. Details are not described herein again.

According to the technical solutions, the radio frame transmitted in a WLAN communication process includes the first MLE and the second MLE, and the first information element included in the first MLE and the second information element included in the second MLE correspond to the station information of the same link. In comparison with an implementation in which the radio frame fails to be transmitted because the station information of the multi-link device cannot be carried when a length of the station information, carried in a single MLE, of the multi-link device is greater than a maximum length configured by the MLE, the station information of the multi-link station device is carried in a manner in which a plurality of MLEs of a radio frame carry station information of a same link. This avoids a radio frame transmission failure and improves communication efficiency.

In addition, a maximum length of information carried in the information element of the MLE is fixed. When a length of station information, carried in a single information element, of a link in the multi-link device is greater than a maximum length configured by the information element, the radio frame fails to be transmitted because the station information of the link in the multi-link device cannot be carried. In the technical solutions, the station information of the same link in the multi-link station device is carried in a manner in which a plurality of information elements (including the first information element and the second information element) of the radio frame carry the station information of the same link. This avoids a radio frame transmission failure and improves communication efficiency.

### BRIEF DESCRIPTION OF DRAWINGS

FIG. 1 is a schematic diagram of a communication system according to an embodiment of this application;
FIG. 2 is a schematic diagram of multi-link association according to an embodiment of this application;
FIG. 3 is a schematic diagram of a radio frame according to an embodiment of this application;
FIG. 4 is another schematic diagram of a radio frame according to an embodiment of this application;
FIG. 5 is a schematic diagram of a communication method according to an embodiment of this application;
FIG. 6 is another schematic diagram of a radio frame according to an embodiment of this application;
FIG. 7a is another schematic diagram of a radio frame according to an embodiment of this application;
FIG. 7b is another schematic diagram of a radio frame according to an embodiment of this application;
FIG. 7c is another schematic diagram of a radio frame according to an embodiment of this application;
FIG. 7d is another schematic diagram of a radio frame according to an embodiment of this application;
FIG. 8a is another schematic diagram of a radio frame according to an embodiment of this application;
FIG. 8b is another schematic diagram of a radio frame according to an embodiment of this application;
FIG. 8c is another schematic diagram of a radio frame according to an embodiment of this application;
FIG. 9a is another schematic diagram of a radio frame according to an embodiment of this application;
FIG. 9b is another schematic diagram of a radio frame according to an embodiment of this application;
FIG. 10 is a schematic diagram of a communication apparatus according to an embodiment of this application; and
FIG. 11 is another schematic diagram of a communication apparatus according to an embodiment of this application.

### DESCRIPTION OF EMBODIMENTS

In this application, unless otherwise specified, for same or similar parts of embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features as required. Correspondingly, the apparatus provided in embodiments of this application may also correspondingly implement these features or functions. Details are not described herein.

In descriptions of this application, the term "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the expression such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the expressions such as "example" and "for example" is intended to present a relative concept in a specific manner for ease of understanding.

For ease of understanding methods provided in embodiments of this application, the following describes a system architecture of the methods provided in embodiments of this application. It may be understood that the system architecture described in embodiments of this application is intended to describe the technical solutions in embodiments of this application more clearly, and do not constitute any limitation on the technical solutions provided in embodiments of this application.

The technical solutions provided in this application are applicable to a WLAN scenario, for example, are applicable to standards of an IEEE 802.11 system, for example, 802.11a/b/g, 802.11n, 802.11ac, 802.11ax, or a next generation of 802.11ax, for example, 802.11be or a further next generation standard.

Although embodiments of this application are mainly described by using an example of a deployed WLAN network, especially a network applying the standards of an IEEE 802.11 system, a person skilled in the art easily understands that aspects of this application may be extended to other networks using various standards or protocols, for example, Bluetooth (Bluetooth), high-performance wireless LAN (high performance radio LAN, HIPERLAN) (which is a wireless standard similar to the IEEE 802.11 standard, and mainly used in Europe), a wide area network (WAN), a personal area network (personal area network, PAN), or other networks that are known or developed in future. Therefore, the various aspects provided in this application are applicable to any appropriate wireless network regardless of coverage and wireless access protocols.

Alternatively, embodiments of this application may be applied to a wireless local area network system, for example, an Internet of things (Internet of things, IoT) or a vehicle-to-everything (Vehicle to X, V2X) network. Certainly, embodiments of this application are applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems applicable to this application are merely examples for description, and communication systems applicable to this application are not limited thereto. This is uniformly described herein, and details are not described below again.

A radio frame sending method and apparatus and a radio frame receiving method and apparatus provided in embodiments of this application may be used in a wireless communication system. The wireless communication system may be a wireless local area network (wireless local area network, WLAN) or a cellular network. The method may be implemented by a communication device in the wireless communication system or a chip or a processor in the communication device. The communication device may be a wireless communication device that supports parallel transmission over a plurality of links. For example, the communication device is referred to as a multi-link device (multi-link device, MLD) or a multi-band device (multi-band device). Compared with a device that supports only single-link transmission, the multi-link device has higher transmission efficiency and higher throughput.

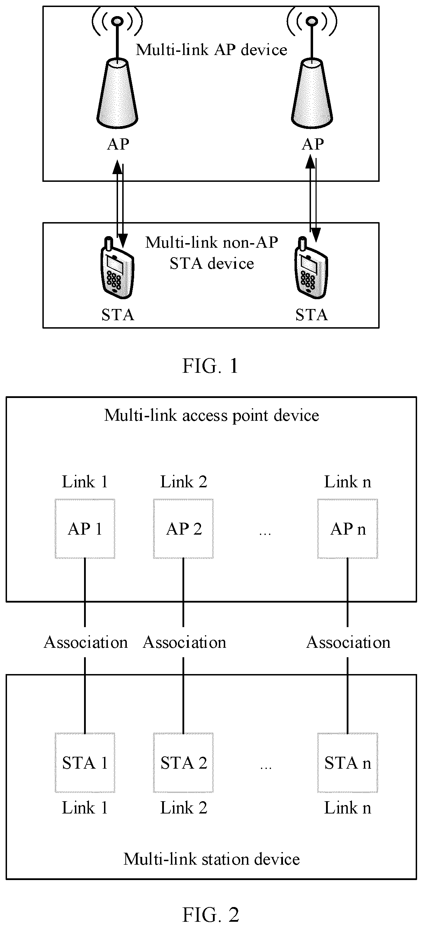

FIG. 1 is a schematic diagram of a communication system according to an embodiment of this application.

As shown in FIG. 1, the communication system mainly includes at least one multi-link access point device (Multi-link AP device) and at least one multi-link non-access point station device (Multi-link non-AP STA device) (multi-link station device for short). The multi-link access point device and the multi-link station device may be collectively referred to as multi-link devices. The following provides descriptions about the multi-link device.

The multi-link device includes one or more affiliated stations (affiliated station, denoted as an affiliated STA). The affiliated STA is a logical station and may operate on a single link. The affiliated station may be an access point (access point, AP) or a non-access point station (non-access point station, non-AP STA). For ease of description, in this application, a multi-link device whose affiliated station is an AP may be referred to as a multi-link AP, a multi-link AP device (multi-link AP device) or an AP multi-link device (AP multi-link device); and a multi-link device (multi-link non-AP STA device) whose affiliated station is a non-AP STA may be referred to as a multi-link STA, a multi-link STA device, or a STA multi-link device (STA multi-link device). For ease of description, "a multi-link device includes an affiliated STA" is also briefly described as "a multi-link device includes a STA" in embodiments of this application.

It should be noted that a multi-link device includes a plurality of logical stations, and each of the logical stations operates on a single link, but a plurality of logical stations are allowed to operate on a same link. A link identifier mentioned below represents one station operating on one link. In other words, if there is more than one station on one link, more than one link identifier is used to represent the more than one station. A link mentioned below sometimes also represents a station operating on the link.

During data transmission between a multi-link AP device and a multi-link STA, a link identifier may be used to identify one link or a station on one link. Before communication, the multi-link AP device and the multi-link STA device may negotiate or communicate with each other about a correspondence between a link identifier and one link or a station on one link. Therefore, during data transmission, a link identifier is carried to indicate a link or a station on a link, instead of transmitting a large amount of signaling information for indication. This reduces signaling overheads and improves transmission efficiency.

In an example, a multi-link AP device may send a management frame, for example, a beacon (beacon) frame, during establishment of a BSS, where the management frame carries an element including a plurality of link identifier information fields, and a correspondence between a link identifier and a station operating on one link may be established in each of the link identifier information fields. Each of the link identifier information fields includes a link identifier, and further includes one or more of the following: a medium access control (medium access control, MAC) address, an operating class, and a channel number, where one or more of the MAC address, the operating class, and the channel number may indicate a link. In another example, in a multi-link association establishment process, the multi-link AP device and the multi-link station device negotiate a plurality of link identifier information fields. In subsequent communication, the multi-link AP device or the multi-link station device may represent a station in the multi-link device by using a link identifier, and the link identifier may further represent one or more attributes of a MAC address of the station, an operating class, and a channel number. The MAC address may alternatively be replaced with an association identifier of the multi-link AP device associated with the station.

If a plurality of stations operate on one link, the link identifier (which is a numeric ID) represents an operating class and a channel number corresponding to the link, and also represents an identifier of a station operating on the link, for example, a MAC address or an AID of the station.

The multi-link device may implement wireless communication according to the 802.11 series protocol. For example, a station complying with extremely high throughput (extremely high throughput, EHT), or a station complying with the 802.11be or compatible with a station supporting the 802.11be implements communication with another device. Certainly, the another device may be or may not be a multi-link device.

The non-AP MLD in this application may be a wireless communication chip, a wireless sensor, or a wireless communication terminal. For example, the non-AP MLD may be a user terminal, a user apparatus, an access apparatus, a subscriber station, a subscriber unit, a mobile station, a user agent, or user equipment that has a Wi-Fi communication function. The user terminal may be any one of various devices having a wireless communication function, for example, a handheld device, a vehicle-mounted device, a wearable device, an Internet of Things (Internet of things, IoT) device, a computing device, another processing device connected to a wireless modem, and user equipment (user equipment, UE) of various forms, a mobile station (mobile station, MS), a terminal (terminal), terminal equipment (terminal equipment), a portable communication device, a handheld device, a portable computing device, an entertainment device, a game device or system, a global positioning system device, any other suitable device configured for network communication via a wireless medium, and the like. In addition, the non-AP MLD may support the 802.11be standard or a next-generation WLAN standard of the 802.11be standard. The non-AP MLD may also support a plurality of WLAN standards such as 802.11ax, 802.11ac, 802.11n, 802.11g, 802.11b, and 802.11a.

The AP MLD in embodiments of this application may be an apparatus that is deployed in a wireless communication network to provide a wireless communication function for a non-AP associated with the AP MLD. The AP MLD is mainly deployed at home, inside a building, and in a campus, with a typical coverage radius of tens of meters to hundreds of meters. Certainly, the AP MLD may alternatively be deployed outdoors. The AP MLD is equivalent to a bridge that connects the wired network and the wireless network. A main function of the AP MLD is to connect various wireless network clients together and then connect the wireless network to the Ethernet. Specifically, the AP MLD may be a communication device with a Wi-Fi chip, for example, a base station, a router, a gateway, a repeater, a communication server, a switch, or a bridge. The base station may include a macro base station, a micro base station, a relay station, and the like in various forms. In addition, the AP MLD may support the 802.11be standard or a next-generation WLAN standard of the 802.11be standard. The AP MLD may also support WLAN standards such as 802.11ax, 802.11ac, 802.11n, 802.11g, 802.11b, and 802.11a.

As described above, the multi-link access point device and the multi-link station device may communicate with each other using a plurality of radio frames, for example, an association request frame, a reassociation request frame, an association response frame, a reassociation response frame, and a probe response frame. Different radio frames may carry a multi-link element (multi-link element, MLE) for carrying station information of a multi-link device. The MLE may also be referred to as a multi-link information unit.

The following uses an association process of a multi-link device as an example to describe specific implementation of an association request frame used in the association process. As shown in FIG. 2, in a multi-link establishment (or multi-link association) process, one station in a multi-link station device may send an association request frame to one access point in a multi-link access point device, where the association request frame carries an MLE for carrying information of a current station of the multi-link station device and information of another station in the multi-link device. Similarly, an association response frame returned by the access point to the station may also carry an MLE for carrying information of a current access point of the multi-link access point device and information of another access point in the multi-link device.

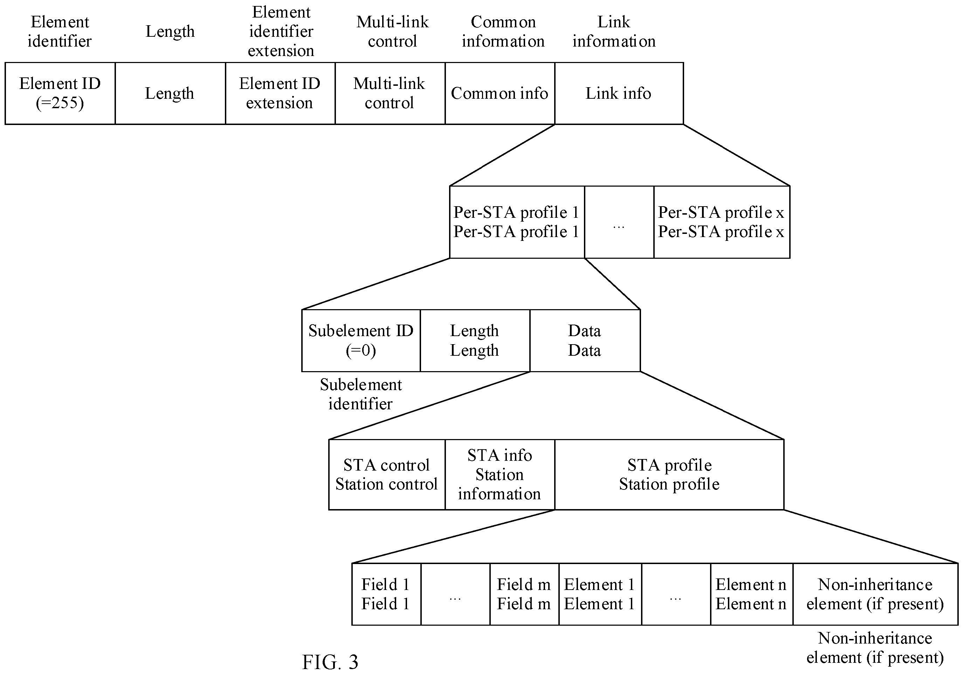

FIG. 3 is a schematic diagram of a frame structure of an MLE. The MLE includes an element identifier (Element ID) field (for example, a value of this field may be 255 shown in FIG. 3), a length (Length) field, an element identifier extension (Element ID Extension) field, a multi-link control (Multi-Link Control) field, a common information (Common Info) field, and a link information (Link Info) field. The common info field carries common information of a plurality of stations in a multi-link device and information of the multi-link device. The link info field carries station information of each link in the multi-link device. The multi-link control field carries a type of the multi-link element, and indication information indicating which fields are present (present) and which fields are not present in the common info field.

Further, as shown in FIG. 3, the link info field may further include one or more per-STA profile (Per-STA Profile) fields. In FIG. 3, an example in which a quantity of per-STA profile fields is x (x is greater than 1) is used. Each per-STA profile field may further include a subelement identifier (Subelement ID) field (for example, a value of the subelement ID field may be 0 shown in FIG. 3), a length (Length) field, and a data (Data) field.

Further, as shown in FIG. 3, the data field may further include a station control (STA Control) field, a station information (STA Info) field, and a station profile (STA Profile) field.

Further, as shown in FIG. 3, the STA profile field includes a plurality of fields (field). For example, a quantity of fields is m (x is greater than 1) in FIG. 3. The STA profile field further includes a plurality of elements (Element). For example, a quantity of elements is n (n is greater than 1) in FIG. 3. In addition, the STA profile field further includes a non-inheritance element (Non-inheritance element) (if present).

However, as shown in FIG. 3, a length of content that can be carried in the MLE is limited, and a specific length of the MLE is indicated by the length field in the MLE. Specifically, the length field indicates a quantity of octets following the length field in the MLE. For example, a length of the length field in the MLE is 8 bits, which indicates a length of 0 to 255 octets. However, a length of information that needs to be carried in the MLE may exceed 255 octets, resulting that only one MLE is insufficient to carry the information of the multi-link device.

In addition, the station information of each link in the multi-link device is carried in the per-STA profile subelement (subelement) in the link info field, while a length of each per-STA profile is also limited. For example, a length of the length field in the per-STA profile is 8 bits, so that the data part can carry a maximum of 255 octets. However, the station information of each link may be longer than 255 octets. Consequently, only one per-STA profile is insufficient to carry the station information of each link.

Before embodiments of this application are described, a technology related to a basic service set (basic service set, BSS) scenario in a WLAN communication system is first described.

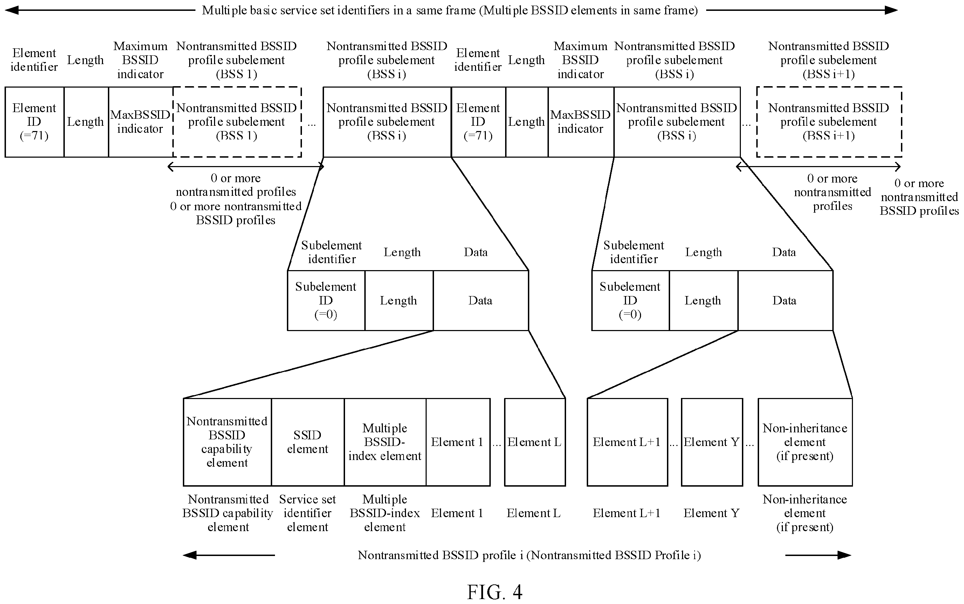

FIG. 4 is a schematic diagram of a structure of a radio frame in which multiple basic service set identifiers are in a same frame (Multiple BSSID elements in same frame).

As shown in FIG. 4, the structure of the radio frame includes two adjacent multiple basic service set identifier elements (Multiple BSSID element). Each of the multiple BSSID elements includes the following fields: an element identifier (Element ID) field (for example, a value of the element ID field is 71 shown in FIG. 3), a length field, a maximum BSS identifier indicator (Max BSSID Indicator) field, and a nontransmitted BSSID profile subelement (Nontransmitted BSSID Profile subelement, or referred to as a nontransmitted BSSID profile) field. There are 0 or more nontransmitted BSSID profile subelement fields (0 or more Nontransmitted BSSID Profile). In FIG. 4, an example in which a quantity of nontransmitted BSSID profile subelement fields is i (i is greater than 1) is used.

Further, as shown in FIG. 4, a nontransmitted BSSID profile subelement i (BSS i) includes a subelement ID field (for example, a value of the subelement ID field is 0), a length field, and a data field.

Further, as shown in FIG. 4, the data field includes a nontransmitted BSSID capability element (Nontransmitted BSSID Capability element) field, a service set identifier element (SSID element), a multiple BSSID-index element (Multiple BSSID-Index element), one or more elements, and a non-inheritance element (if present). In the example shown in FIG. 4, a nontransmitted BSSID profile subelement i in a multiple BSSID element 1 includes elements 1 to L (L is greater than 1), and a nontransmitted BSSID profile subelement i in a multiple BSSID element 2 includes element (L+1) to element Y (Y is greater than L).

Specifically, the multiple BSSID element carries information about a plurality of virtual APs in a multi-link device to which an AP belongs. The length field occupies 8 bits, indicating that a maximum of 255 octets can be carried. However, a length of the information of the plurality of virtual APs may exceed 255 octets. Therefore, a plurality of multiple BSSID elements are used to carry the information of the plurality of virtual APs. As shown in FIG. 4, the multiple BSSID element 1 carries a first portion of information about a BSS 1 to a BSS i, and the multiple BSSID element 2 carries the remaining portion of information about the BSS i and information about a BSS (i+1). Content of the two multiple BSSID elements may be concatenated, to obtain information about the BSS 1 to the BSS (i+1). Information about each BSS starts with a nontransmitted BSSID capability element.

However, in the example shown in FIG. 4, because the information about the BSS i is distributed in two multiple BSSID elements, the station needs to read an information element 1 of a data part of the nontransmitted BSSID profile subelement in the multiple BSSID element 2, to determine, based on whether the information element 1 is a nontransmitted BSSID capability element, whether the nontransmitted BSSID profile subelement is information about a new BSS or a remaining portion of information about a previous BSS.

However, for the frame structure of the MLE shown in FIG. 3, the first field of the per-STA profile subelement is a STA Control field instead of an information element. Content carried in the STA control field is variable. Different from content of a fixed information unit, content of a first byte (element ID) of the STA control field is fixed. Therefore, it cannot be determined, by reading the first byte of the data part of the per-STA profile in the second MLE, whether the per-STA profile is information about a new AP or a remaining portion of information about a previous AP.

In other words, an implementation in which information about a same AP is carried in multiple BSSID elements in the current multiple BSSID element scenario is not applicable to a process in which station information of a same link is carried in a plurality of MLEs in the MLE scenario. Therefore, in a current WLAN radio frame transmission process, a solution to resolve a radio frame transmission failure because the MLE cannot carry station information of the multi-link device is urgently needed.

To resolve the foregoing problem, this application provides a radio frame sending method and apparatus, and a radio frame receiving method and apparatus, to carry station information of a multi-link station device in a manner in which a plurality of information elements in a plurality of MLEs of a radio frame carry station information of a same link. This avoids a radio frame transmission failure and improves communication efficiency.

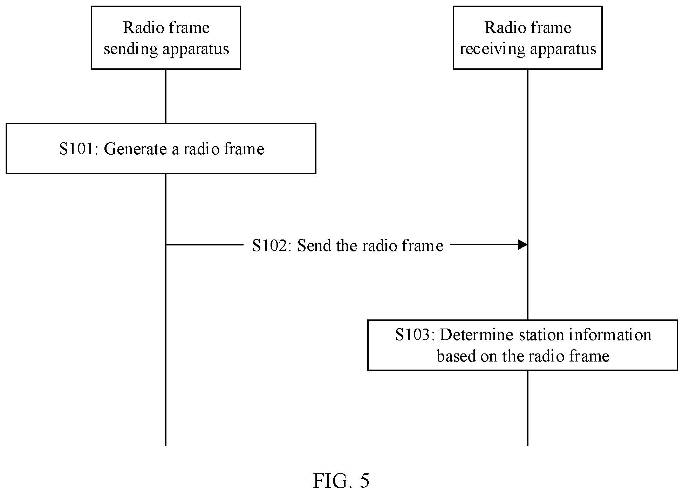

FIG. 5 is a schematic flowchart of a communication method according to an embodiment of this application. The method includes the following steps. It may be understood that, as shown in FIG. 5, the communication method relates to radio frame transmission. Therefore, the communication method may also be referred to as a radio frame sending method, or referred to as a radio frame receiving method.

S101: A radio frame sending apparatus generates a radio frame.

In this embodiment, the radio frame sending apparatus generates the radio frame. The radio frame includes a first multi-link element MLE and a second MLE, the first MLE includes a first information element, the second MLE includes a second information element, and the first information element and the second information element correspond to station information of a same link.

In this embodiment and subsequent embodiments, that the first information element and the second information element correspond to the station information of the same link may also be expressed as that the first information element and the second information element correspond to different portions of the station information of the same link. In addition, the station information of the same link is fragmented into at least two portions. One portion of the station information of the link corresponds to the first information element (which is also referred to as that one portion of the station information of the link is carried in the first information element), and the other portion of the station information of the link corresponds to the second information element (which is also referred to as that the other portion of the station information of the link is carried in the second information element).

It should be noted that, in this embodiment and subsequent embodiments, both the radio frame sending apparatus and a radio frame receiving apparatus may be multi-link devices. For example, the radio frame sending apparatus may be a multi-link access point device, and the radio frame receiving apparatus is a multi-link station device. For another example, the radio frame sending apparatus may be a multi-link station device, and the radio frame receiving apparatus is a multi-link access point device. In addition, both the radio frame sending apparatus and the radio frame receiving apparatus may be stations in a multi-link device, and the station may be an AP or a non-AP STA. For example, the radio frame sending apparatus may be an AP in the multi-link device, and the radio frame receiving apparatus is a non-AP STA in the multi-link device. For another example, the radio frame sending apparatus may be a non-AP STAin the multi-link device, and the radio frame receiving apparatus is an AP in the multi-link device.

Specifically, the radio frame generated by the radio frame sending apparatus in step S 101 may be an association request frame, a reassociation request frame, an association response frame, a reassociation response frame, or a probe response frame. In other words, in a plurality of implementations of the radio frame, the radio frame may carry the first MLE and the second MLE, and the first information element included in the first MLE and the second information element included in the second MLE correspond to the station information of the same link. Therefore, station information of a multi-link station device may be carried in different radio frames in a manner in which a plurality of MLEs carry station information of a same link, to improve communication efficiency.

In addition, in this embodiment and subsequent embodiments, the first MLE (or the second MLE) may indicate at least one MLE, that is, "first" or "second" does not limit a quantity of MLEs indicated by the first MLE (or the second MLE). Similarly, the first information element (or the second information element) may indicate at least one information element. In this application, a quantity of MLEs indicated by the first MLE (or the second MLE) is not limited, and a quantity of information elements indicated by the first information element (or the second information element) is not limited either.

In a possible implementation, in the radio frame generated in step S101, the first information element and the second information element each include a link identifier (Link ID) field, and a value of the link identifier field of the first information element is the same as a value of the link identifier field of the second information element. Specifically, an information element may identify, by using a link identifier field included in the information element, a link on which station information carried in the information element is located. That the value of the link identifier field of the first information element is the same as the value of the link identifier field of the second information element may indicate that a link on which the station information carried in the first information element is located is the same as a link on which the station information carried in the second information element is located. Therefore, a same value of the link identifier fields indicates that the first information element and the second information element correspond to the station information of the same link.

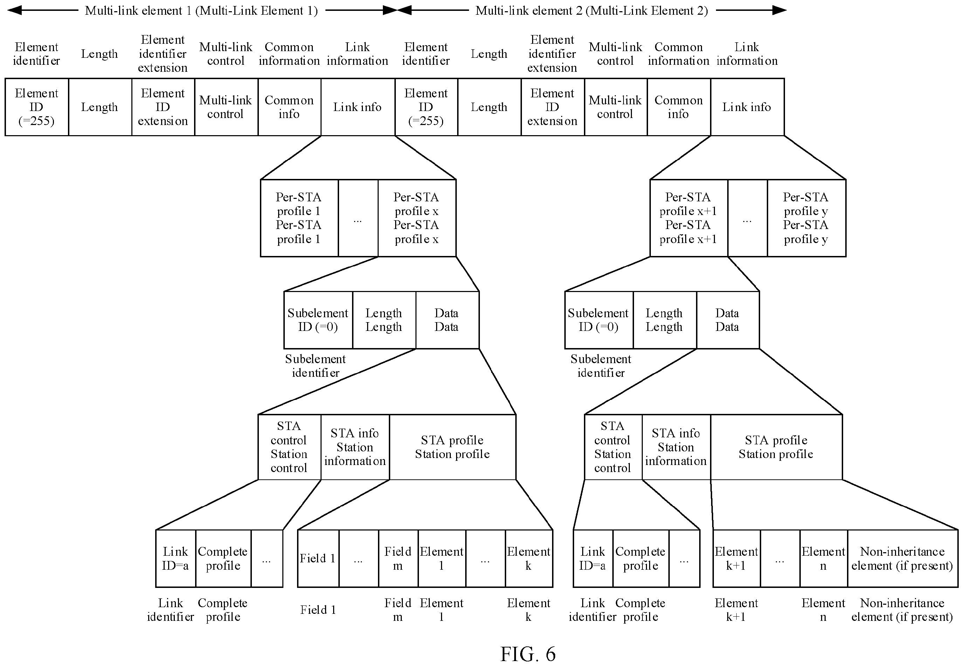

For example, the following describes an implementation process in which the first MLE and the second MLE each include one MLE in a scenario shown in FIG. 6. In addition, in FIG. 6, the first MLE is denoted as an MLE 1 or a 1^{st} MLE, and the second MLE is denoted as an MLE 2 or a 2^{nd} MLE.

As shown in FIG. 6, information about another station in an MLD in which a multi-link station (including a multi-link) is located is carried in two MLEs. A 1^{st} MLE carries a per-STA profile 1 to a per-STA profile x, and a 2^{nd} MLE carries a per-STA profile x+1 to a per-STA profile y. For the per-STA profile x and the per-STA profile x+1, if values of link ID fields in STA control fields are equal (both equal to a), it indicates that the per-STA profile x and the per-STA profile x+1 carry station information of a same link.

Specifically, a value of a link ID field in a STA control field of a per-STA profile subelement 1 of the MLE 2 is set to be the same as a value of a link ID field in a STA control field of a last per-STA profile subelement of a previous MLE (namely, the MLE 1), to indicate that content carried in the per-STA profile subelement 1 of the MLE 2 is a continuation of content of the last per-STA profile subelement of the previous MLE. In other words, if values of link ID fields in STA control fields of two per-STA profile subelements are the same, STA profiles carried in the two per-STA profile subelements carry station information of a same link.

Optionally, when content carried in a per-STA profile subelement is a continuation of content of a previous per-STA profile subelement, a STA profile field of the per-STA profile subelement does not carry content of a STA profile field of the previous per-STA profile subelement.

In a possible implementation, in the radio frame generated in step S101, an element type of the first information element is the same as an element type of the second information element. Specifically, the element type of the first information element is the same as the element type of the second information element, that is, the station information of the same link is carried in a plurality of information elements of a same element type.

Optional, the first information element and the second information element each include a type field, and a value of the type field of the first information element is the same as a value of the type field of the second information element.

Optionally, the type field is a subelement identifier (subelement ID shown in FIG. 3) field.

In another possible implementation, in the radio frame generated in step S101, an element type of the first information element is different from an element type of the second information element. Specifically, the element type of the first information element is different from the element type of the second information element, that is, the station information of the same link is carried in a plurality of information elements of different element types.

In a possible implementation, the first information element and the second information element each include a type field, and a value of the type field of the first information element is different from a value of the type field of the second information element. The type field of the information element indicates a type of the information element, and different values of the type field may indicate that the element type of the first information element is different from the element type of the second information element.

Specifically, a first value of the type field indicates that a corresponding information element (the first information element) carries a start portion of the station information of the link, and a second value (the second value is different from the first value) of the type field indicates that a corresponding information element (the second information element) carries a subsequent portion (a non-start portion) of the station information of the link. In other words, the second value of the type field indicates that the corresponding information element (the second information element) and a previous information element (which may be the first information element or the second information element) carry the station information of the same link.

Further, when a value of a type field of an information element is a second value, the information element does not carry a STA control field or a STA info field.

It should be noted that, in this embodiment and subsequent embodiments, the first value (or the second value, or a third value, or a fourth value) may be indicated by using a value of at least one bit. For example, when a quantity of bits of the at least one bit is 1, the value may include "0" or "1". For another example, when a quantity of bits of the at least one bit is 2, the value may include "10", "11", "00", or "01". For another example, when a quantity of bits of the at least one bit is 3, the value may include "110", "111", "100", "101", "011", "000", "001", or "010". For another example, when a quantity of bits of the at least one bit is another quantity, a similar manner may be used for implementation. Details are not described herein again.

Optionally, the type field is a subelement identifier (subelement ID shown in FIG. 3) field.

Specifically, in the foregoing implementation, a new subelement is defined as the second information element, to carry information that cannot be carried in the per-STA profile subelement (namely, the first information element). The following provides descriptions by using implementation examples shown in Table 1 and Table 2.

As shown in Table 1, subelements that may be currently included in a link info field part of the current MLE include a per-STA profile subelement indicated by a subelement ID whose value is 0 and a vendor specific (Vendor Specific) subelement indicated by a subelement ID whose value is 221. In addition, there are extensible (Extensible) indications for the two subelements respectively. Values, ranging from 1 to 220, of the subelement ID and values, ranging from 222 to 225, of the subelement ID are reserved (Reserved) values.

**Table 1**

| Subelement ID | Name | Extensible |
|---|---|---|
| 0 | Per-STA profile | Yes |
| 1 to 220 | Reserved | |
| 221 | Vendor specific | Vendor defined |
| 222 to 255 | Reserved | |

According to the technical solutions, when the station information of the same link is carried in the plurality of information elements of different element types, an implementation example shown in Table 1 may be modified to an implementation example shown in Table 2.

As shown in Table 2, a new subelement is defined, and a value of a subelement ID of the subelement may be 1 or another value. In Table 1, a value of a subelement ID whose value is a reserved value is any one of 1 to 220 and 222 to 255.

Optionally, as shown in Table 2, the newly defined subelement may be referred to as a per-STA profile extension subelement (Per-STA Profile Extension subelement), or may be referred to as another element name different from the name of the per-STA profile. This is not specifically limited herein.

**Table 2**

| Subelement ID | Name | Extensible |
|---|---|---|
| 0 | Per-STA profile | Yes |
| 1 | Per-STA profile extension | Yes |
| 2 to 220 | Reserved | |
| 221 | Vendor specific | Vendor defined |
| 222 to 255 | Reserved | |

Based on the implementation example shown in Table 2, the new subelement is used to carry link information that cannot be carried in the per-STA profile. In other words, station information of a link may be fragmented into several parts. A first part is carried in a per-STA profile subelement, and other parts are carried in one or more per-STA profile extension subelements. A difference lies in that values of subelement IDs are different.

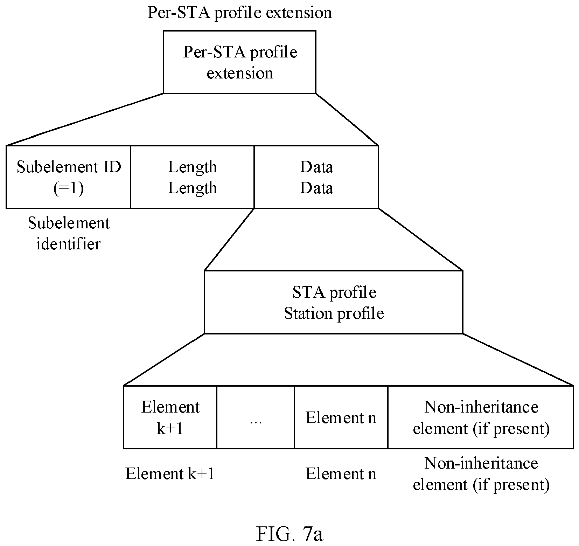

For example, as shown in FIG. 7a, a frame structure of the per-STA profile extension subelement may be similar to an implementation process of the per-STA profile in FIG. 3. In comparison with the frame structure of the per-STA profile, in the frame structure of the per-STA profile extension subelement, a data field may not include a STA control field and a STAinfo field, and includes only a STA profile field.

Optionally, in the example shown in FIG. 7a, the STA profile field includes fields, or the STA profile field does not include fields.

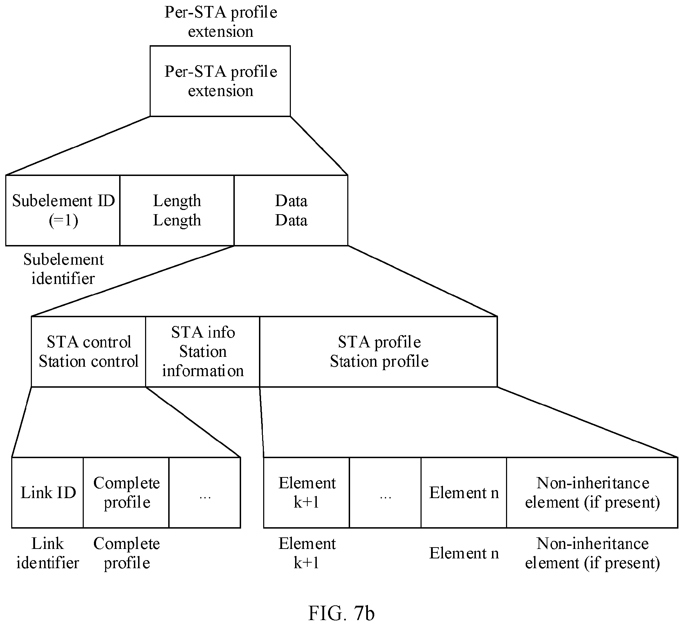

For example, as shown in FIG. 7b, a frame structure of the per-STA profile extension subelement may be similar to an implementation process of the per-STA profile in FIG. 3. In comparison with the frame structure of the per-STA profile, in the frame structure of the per-STA profile extension subelement, a data field may also include a STA control field and a STA info field, and a STA profile field does not include fields.

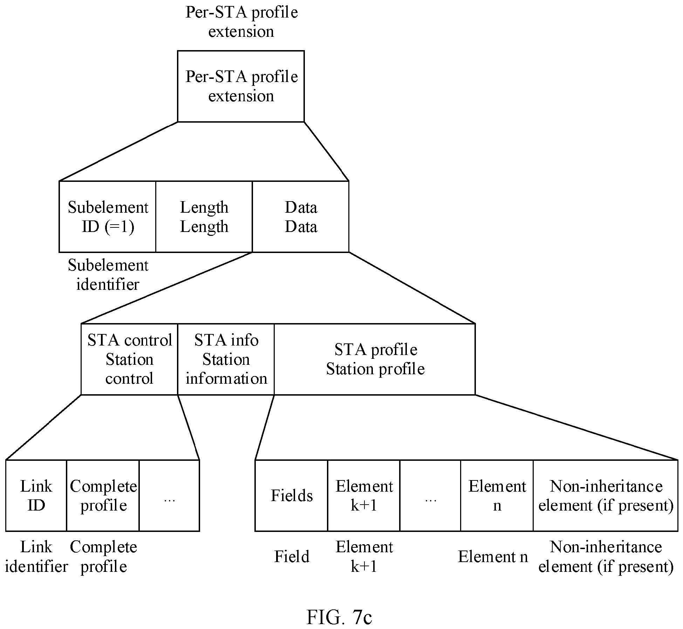

For example, as shown in FIG. 7c, a frame structure of the per-STA profile extension subelement may be similar to an implementation process of the per-STA profile in FIG. 3. In comparison with the frame structure of the per-STA profile, in the frame structure of the per-STA profile extension subelement, a data field may also include a STA control field and a STA info field, and a STA profile field further includes fields.

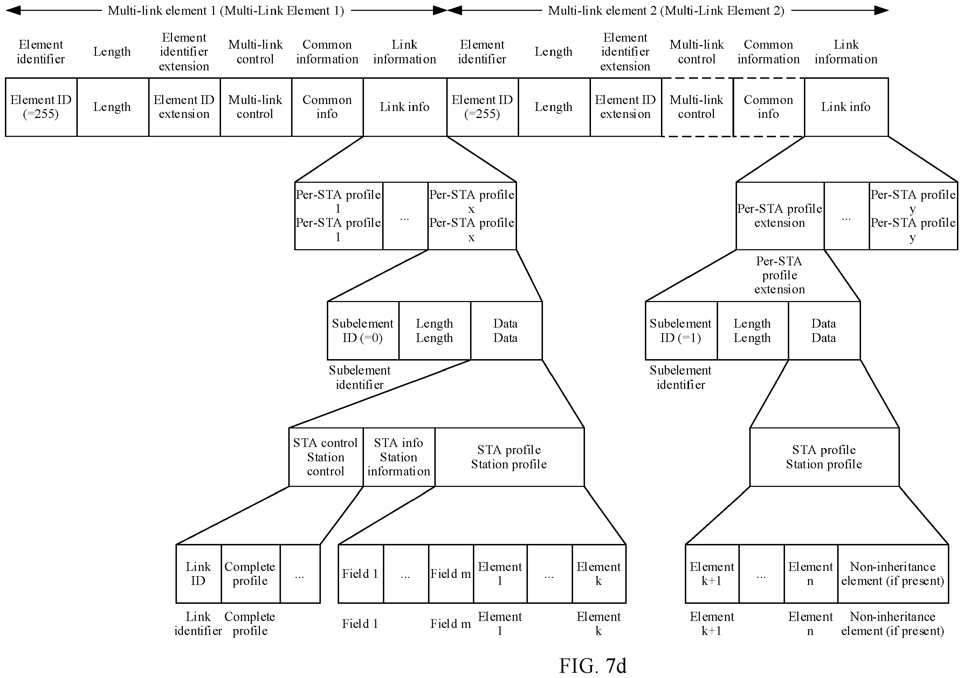

The following uses an example to describe a fragmented transmission manner of station information of a link. As shown in FIG. 7d, information about another station in an MLD in which a station is located is carried in a first MLE (which is denoted as an MLE 1 or a 1^{st} MLE) and a second MLE (which is denoted as an MLE 2 or a 2^{nd} MLE). The 1^{st} MLE carries a per-STA profile 1 to a per-STA profile x, and the 2^{nd} MLE carries per-STA profile extension and another per-STA profile. Because the 2^{nd} MLE carries the per-STA profile extension, it indicates that the per-STA profile extension and a previous per-STA profile (namely, the per-STA profile x) carry the station information of the same link.

In a possible implementation, in the radio frame generated in step S101, the first information element includes first indication information, and the first indication information indicates whether the station information is fragmented. Specifically, the first information element may include the first indication information indicating whether the station information is fragmented, to indicate that station information, carried in the first information element, of a link is fragmented into at least two fragments, and at least one of the at least two fragments is carried in another information element (for example, the second information element). Therefore, the first indication information indicates that the first information element and the second information element correspond to the station information of the same link.

Optionally, the second information element also includes the first indication information.

For example, the first indication information may be indicated by using one bit. For example, when a value of the first indication information is a first value, it indicates that the station information is fragmented and a remaining portion of the station information is carried in a next per-STA profile information element. In addition, when a value of the first indication information is a second value, it indicates that the station information is not fragmented. Apparently, the value may be changed, or an indication process of the first indication information is implemented in another manner. This is not limited herein.

Optionally, a function of the first indication information may alternatively be expressed in another form. For example, the first indication information indicates whether the station information is fragmented. For another example, the first indication information indicates whether different fragments of the station information are carried in different information elements. When the first indication information is expressed in another form, the first indication information may be indicated by using different values of the bit, or may be indicated in another manner. This is not limited herein.

For example, the first indication information may be indicated by using two bits. For example, when a value of the first indication information is a first value, it indicates that the station information is fragmented, and station information of the first information element is a first fragment. For another example, when a value of the first indication information is a second value, it indicates that the station information is fragmented, and station information of the first information element is a last fragment. For another example, when a value of the first indication information is a third value, it indicates that the station information is fragmented, and station information of the first information element is an intermediate fragment (neither a first fragment nor a last fragment). For another example, when a value of the first indication information is a fourth value, it indicates that the first indication information indicates that the station information is not fragmented. Apparently, the value may be changed, or an indication process of the first indication information is implemented in another manner. This is not limited herein.

Further, the first indication information is carried in a station control (for example, STA control in STA info shown in FIG. 3) field of the first information element. In other words, the first indication information indicating whether the station information is fragmented may be carried in the station control field of the first information element, to provide a specific implementation of implementing the first indication information.

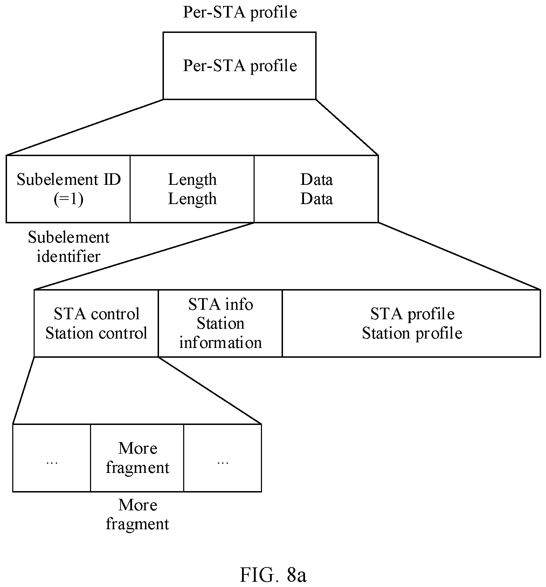

For example, as shown in FIG. 8a, in the frame structure shown in FIG. 3, the STA control field of the per-STA profile subelement may carry the first indication information. In addition, the first indication information indicates that the per-STA profile subelement indicates whether the station information is fragmented.

Optionally, the first indication information is a more fragment (More Fragment) field in FIG. 8a, or may be another field name. This is not limited herein. In addition, in the implementation shown in FIG. 8a, the more fragment field may be implemented by using one bit or two bits. For specific implementation, refer to the foregoing descriptions.

In a possible implementation, in the radio frame generated in step S101, the first information element includes second indication information, and the second indication information indicates a quantity of information elements that carry the station information. Specifically, the first information element may include the second indication information indicating the quantity of information elements that carry the station information, to indicate that station information, carried in the first information element, of a link is carried in a plurality of information elements (at least including the second information element), and indicate a quantity of the plurality of information elements. Therefore, the second indication information indicates that the first information element and the second information element correspond to the station information of the same link.

Optionally, the second information element includes the second indication information.

For example, the second indication information may be indicated by using one or more bits, to indicate the quantity of information elements that carry the station information. Specifically, when the second indication information is indicated by using k (k is a natural number) bits, it may indicate that a maximum quantity of information elements that carry the station information is the k^{th} power of 2. For example, when a value of k is 1, it may indicate that a maximum quantity of information elements that carry the station information is 2. For another example, when a value of k is 4, it may indicate that a maximum quantity of information elements that carry the station information is 16. Apparently, when a value of k is another value, the quantity of information elements that carry the station information may alternatively be indicated in a similar manner.

Optionally, when there are a plurality of information elements that carry the station information, in the radio frame generated in step S101, the plurality of information elements may be a plurality of continuous information elements located in the radio frame.

Optionally, the second indication information may alternatively be expressed in another form. For example, the second indication information indicates a quantity of fragments of the station information. For another example, the second indication information indicates the quantity of information elements that carry the station information, and the information elements that carry the station information include the first information element. For another example, the second indication information indicates the quantity of information elements that carry the station information, and the information elements that carry the station information do not include the first information element. For another example, the second indication information indicates a sequence number of the information element that carries the station information, and the sequence number is a forward sequence number. For another example, the second indication information indicates a sequence number of the information element that carries the station information, and the sequence number is a backward sequence number. When the second indication information is expressed in another form, the first indication information may be indicated by using different values of the k bits, or may be indicated in another manner. This is not limited herein.

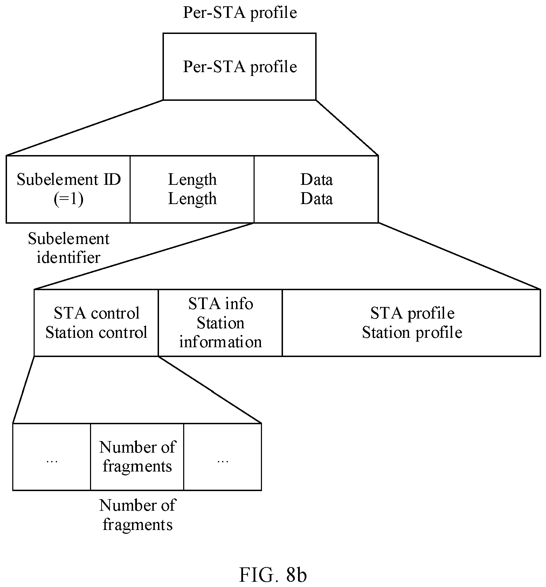

For example, as shown in FIG. 8b, in the frame structure shown in FIG. 3, the STA control field of the per-STA profile subelement may carry the second indication information. In addition, the second indication information indicates that the per-STA profile subelement indicates a quantity of fragments into which the station information is fragmented, or indicates a quantity of fragments into which remaining portion, other than the per-STA profile fragment, of the station information is fragmented.

Optionally, the second indication information is a number of fragments (Number of Fragments) field in FIG. 8b, or may be another field. This is not limited herein. In addition, in the implementation shown in FIG. 8b, the number of fragments field may be implemented by using one or more bits. For specific implementation, refer to the foregoing descriptions.

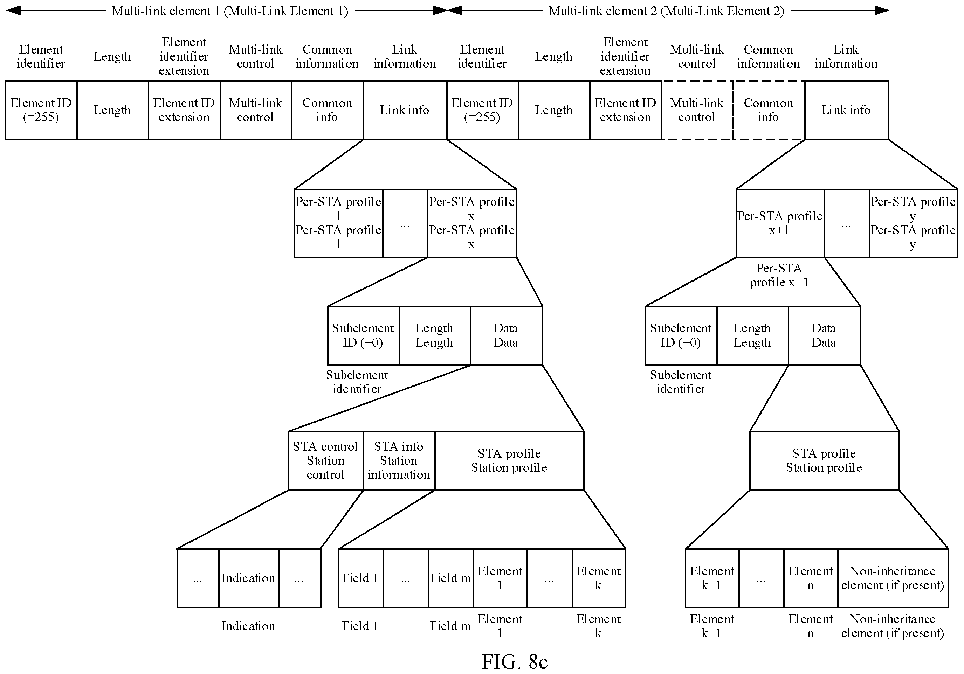

The following uses an implementation example in FIG. 8c to describe a fragmented transmission manner of station information of a link. As shown in FIG. 8c, information about another station in an MLD in which a station is located is carried in a first MLE (which is denoted as an MLE 1 or a 1^{st} MLE) and a second MLE (which is denoted as an MLE 2 or a 2^{nd} MLE). The 1^{st} MLE carries a per-STA profile 1 to a per-STA profile x, and the 2^{nd} MLE carries a per-STA profile x+1 to a per-STA profile y. It can be learned from indication information of a STA control field of the per-STA profile x that the per-STA profile x and the per-STA profile x+1 carry station information of a same link.

In a possible implementation, in the radio frame generated in step S101, the second information element includes third indication information, and the third indication information indicates that the second information element is a last information element in the plurality of information elements that carry the station information. Specifically, the second information element may include the third indication information indicating that the second information element is the last information element in the plurality of information elements that carry the station information, to indicate that station information, carried in the second information element, of a link is carried in a plurality of information elements (at least including the second information element), and that the second information element is the last information element in the plurality of information elements. Therefore, the third indication information indicates that the first information element and the second information element correspond to the station information of the same link. In other words, if an information element does not carry the third indication information, it indicates that the information element and a next information element carry station information of a same link.

Optionally, when the first information element in the radio frame includes the third indication information, it may indicate that station information, carried in the first information element, of a link is not fragmented.

Optionally, the third indication information indicates that there is no other information element that carries the station information after the second information element.

Optionally, the station information is fragmented into a plurality of fragments, and the third indication information indicates that a fragment, carried in the second information element, of the station information is a last fragment.

Optionally, the third indication information includes a non-inheritance element (non-inheritance element).

Specifically, if station information of a link is fragmented, a non-inheritance element is carried in a last per-STA profile subelement corresponding to the station information, and a previous (not the last) per-STA profile subelement does not carry a non-inheritance element. If the station information is not fragmented, a non-inheritance element needs to be carried in all corresponding per-STA profile subelements, and a value of a length field of the non-inheritance element is set to 1, to indicate that only an element ID extension field exists after the length field, and that no other field exists.

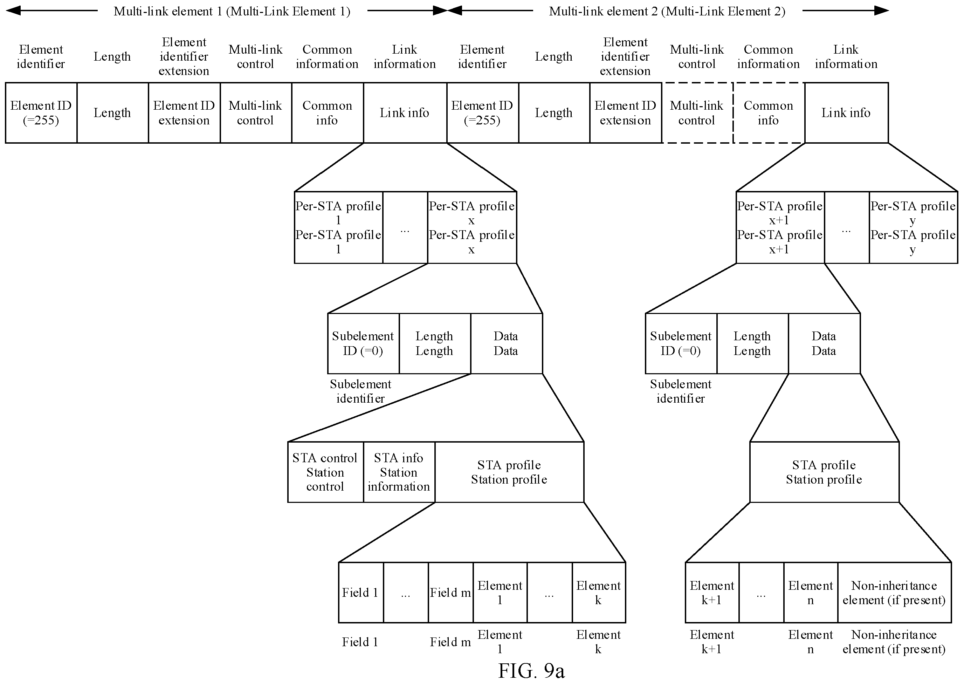

For example, as shown in FIG. 9a, information about another station in an MLD in which a station is located is carried in a first MLE (which is denoted as an MLE 1 or a 1^{st} MLE) and a second MLE (which is denoted as an MLE 2 or a 2^{nd} MLE). The 1^{st} MLE carries a per-STA profile 1 to a per-STA profile x, and the 2^{nd} MLE carries a per-STA profile x+1 to a per-STA profile y. Because the per-STA profile x does not carry a non-inheritance element, it can be learned that the per-STA profile x and the per-STA profile x+1 carry station information of a same link. In addition, because the per-STA profile x+1 carries a non-inheritance element, it can be learned that the per-STA profile x+1 is the last per-STA profile subelement that carries the station information.

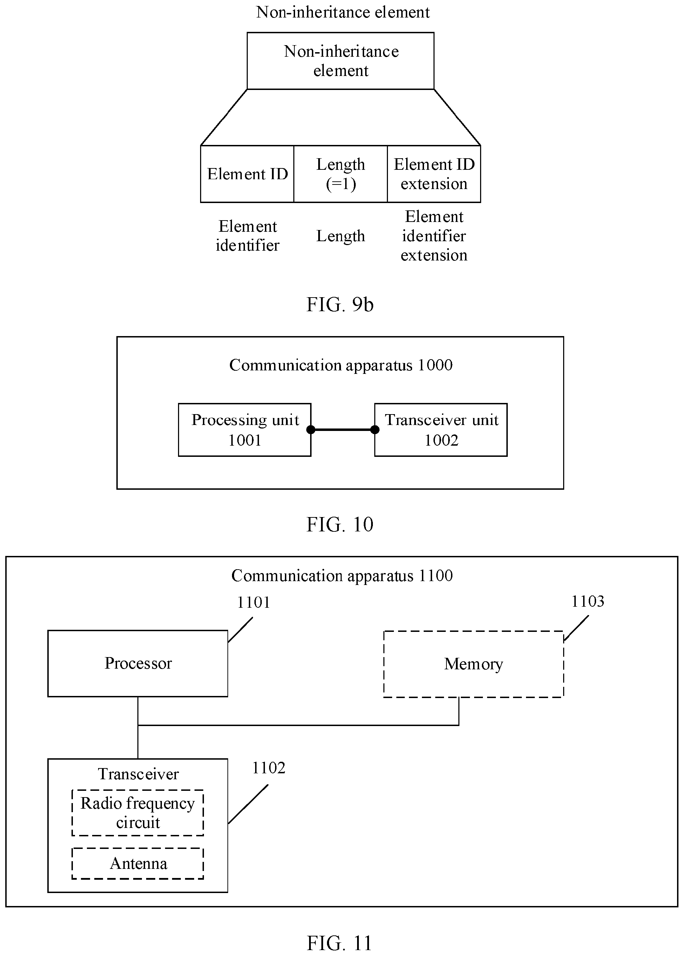

In addition, in the MLE configured based on FIG. 3, the non-inheritance element is optional in the per-STA profile subelement. The non-inheritance element includes a series of ID numbers and ID extension numbers of elements that cannot be inherited by a reported STA from a reporting STA. The reporting STA is a STA that sends the MLE, and the reported STA is a STA on another link. However, in the foregoing implementation of the third indication information, it is required that the non-inheritance element needs to be carried in the last per-STA profile subelement that carries the station information. Therefore, as shown in FIG. 9b, when the non-inheritance element does not need to be carried (that is, the station does not include a non-inheritance information element), the non-inheritance element also needs to be carried in the per-STA profile subelement, and a value of a length field of the non-inheritance element is set to 1, to indicate that only the element ID extension field exists after the length field, and no other field exists.

In a possible implementation, in the radio frame generated in step S101, the first information element and the second information element each include a complete profile (Complete Profile) field, and a value of the complete profile field of the first information element is the same as a value of the complete profile field of the second information element. Specifically, an information element may indicate, by using a complete profile field included in the information element, a related profile of station information carried in the information element. That the value of the complete profile field of the first information element is the same as the value of the complete profile field of the second information element may indicate that a profile of station information carried in the first information element is the same as a profile of station information carried in the second information element. Therefore, a same value of the complete profile fields indicates that both the first information element and the second information element in the radio frame carry complete station information.

Optionally, the second information element does not include the complete profile field.

Optionally, the second information element includes the complete profile field, and a value of the complete profile field of the second information element is a reserved (reserved) value. In this case, the value of the complete profile field indicates other information (in addition to indicating whether the information element carries complete station information of a corresponding link).

In a possible implementation, in the radio frame generated in step S101, the first information element includes a station information (STA Info) field, and the station information field indicates related station information of the first information element and related station information of the second information element. Specifically, an information element may indicate, by using a station information field included in the information element, related station information carried in the information element. The station information field of the first information element not only indicates the related station information carried in the first information element, but also indicates the related station information carried in the second information element. Therefore, the station information field of the first information element indicates that the first information element and the second information element correspond to the station information of the same link.

In a possible implementation, in the radio frame generated in step S101, the second information element does not include a station information field; or the second information element includes the station information field, and a value of the station information field is a reserved (reserved) value. Specifically, because the related station information of the second information element is indicated by the station information field of the first information element, the second information element may not carry the station information field, or the station information field of the second information element is set to a reserved value, to carry other information/data different from information in the station information field by using the reserved value. Therefore, the station information field of the first information element is reused to indicate the related station information of the plurality of information elements, to reduce overheads and further improve communication efficiency.

Specifically, a current station information field includes at least one piece of the following information: a MAC address indicating an address of a station on a link, a beacon interval indicating a period for receiving a beacon frame by the station, DTIM info indicating a period for receiving a DTIM beacon frame by the station and time for receiving a next DTIM beacon frame, and an NSTR indication bitmap indicating a capability of the station on the link to perform simultaneous transmission and reception together with a station on another link. In the foregoing implementation, when a value of the station information field is a reserved value, the value of the station information field indicates other information (other than the at least one piece of information).

Optionally, the second information element includes a station information field.

In a possible implementation, the station information field includes at least one of the following: a medium access control address present (medium access control address present, MAC Address Present) field, a beacon interval present (Beacon Interval Present) field, a delivery traffic indication message information present (delivery traffic indication message information present, DTIM Info Present) field, and an NSTR link pair present field. Specifically, the station information field may specifically include at least one of the foregoing fields, to indicate related station information.

In a possible implementation, in the radio frame generated in step S101, the first MLE and the second MLE are adjacent MLEs. Specifically, the first MLE and the second MLE may be MLEs at adjacent locations in the radio frame. Compared with a manner in which station information of a same link is carried in MLEs that are not adjacent, a manner in which the station information of the same link is carried in a plurality of adj acent MLEs in the radio frame may help a receive end of the radio frame obtain the station information of the same link.

Optionally, in the radio frame, there is no other MLE between the first MLE and the second MLE.

Optionally, in the radio frame, the first MLE is located before the second MLE, or in the radio frame, the second MLE is located after the first MLE.

In a possible implementation, in the radio frame generated in step S101, the first MLE includes a common information field, and the common information field indicates multi-link common information of the first MLE and multi-link common information of the second MLE. Specifically, an information element may indicate, by using a common information field included in the information element, multi-link common information carried in the information element. The common information field of the first information element not only indicates the multi-link common information carried in the first information element, but also indicates the multi-link common information carried in the second information element. Therefore, the common information field of the first information element indicates multi-link common information corresponding to the first information element and the second information element.

In a possible implementation, the second MLE does not include a common information field; or the second MLE includes the common information field, and a value of the common information field of the second MLE is a reserved value. Specifically, because the multi-link common information of the second information element is indicated by the common information field of the first information element, the second information element may not carry the common information field, or the common information field of the second information element is set to a reserved value, to carry other information/data different from information in the common information field by using the reserved value. Therefore, the common information field of the first information element is reused to indicate the multi-link common information of the plurality of information elements, to reduce overheads and further improve communication efficiency.

Optionally, the second information element includes a common information field.

In a possible implementation, in the radio frame generated in step S101, the first MLE includes a multi-link control field, and the multi-link control field indicates multi-link control information of the first MLE and multi-link control information of the second MLE. Specifically, an information element may indicate, by using a multi-link control field included in the information element, multi-link control information carried in the information element. The multi-link control field of the first information element not only indicates the multi-link control information carried in the first information element, but also indicates the multi-link control information carried in the second information element. Therefore, the multi-link control field of the first information element indicates multi-link control information corresponding to the first information element and the second information element.

In a possible implementation, the second MLE does not include a multi-link control field; or the second MLE includes the multi-link control field, and a value of a presence bitmap (Presence bitmap) field in the multi-link control field of the second MLE is all 0s. Specifically, because the multi-link control information of the second information element is indicated by the multi-link control information field of the first information element, the second information element may not carry the multi-link control information field, or the multi-link control field of the second information element is set to a reserved value, to carry other information/data different from information in the multi-link control field by using the reserved value. Therefore, the multi-link control field of the first information element is reused to indicate the multi-link control information of the plurality of information elements, to reduce overheads and further improve communication efficiency.

Optionally, the second information element includes a common information field.

S102: The radio frame sending apparatus sends the radio frame.

In this embodiment, after generating the radio frame in step S101, the radio frame sending apparatus sends the radio frame in step S102. Correspondingly, the radio frame receiving apparatus receives the radio frame in step S102.

For example, in step S102, the radio frame sending apparatus and the radio frame receiving apparatus may perform radio frame transmission based on the communication system shown in FIG. 1 or FIG. 2, that is, the radio frame is transmitted by using one or more of a plurality of links between the radio frame sending apparatus and the radio frame receiving apparatus.

Optionally, the radio frame sending apparatus may perform sending preprocessing on the radio frame, and send, in step S 102, a processing result obtained through sending preprocessing. For example, the sending preprocessing may include encryption, scrambling, and another manner. Correspondingly, the radio frame sending apparatus may receive the processing result obtained by performing sending preprocessing on the radio frame, and perform, in step S102, receiving preprocessing on the processing result, to obtain the radio frame. For example, the receiving preprocessing may include decryption, descrambling, and another manner.

S103: The radio frame receiving apparatus determines the station information based on the radio frame.

In this embodiment, the radio frame receiving apparatus determines the station information based on the radio frame received in step S102.

Specifically, in step S103, the radio frame receiving apparatus determines the station information of the same link by using the first information element included in the first MLE of the radio frame and the second information element included in the second MLE, to obtain the station information of the same link in the plurality of MLEs.

Optionally, in step S103, the radio frame receiving apparatus may determine, based on target information included in the radio frame, the station information of the same link corresponding to the first information element included in the first MLE and the second information element included in the second MLE. The target information may include at least one of the following: the link ID, the subelement ID, the first indication information, the second indication information, the third indication information, and the like.

In an implementation, when the target information includes the link ID, the radio frame receiving apparatus receives the radio frame in step S102. If the radio frame includes at least two MLEs, and values of link ID fields in per-STA profile subelements included in each MLE of the at least two MLEs are the same, the radio frame receiving apparatus may determine, in step S103, that STA profiles carried in the per-STA profile subelements carry the station information of the same link. Further, the station may concatenate per-STA profile subelements, in a sequence in which the per-STA profile subelements appear in the radio frame, corresponding to link IDs of a same value, to obtain the station information of the same link.

In an implementation, when the target information includes the subelement ID, the radio frame receiving apparatus receives the radio frame in step S102. If the radio frame includes at least two MLEs, and each MLE other than a 1^{st} MLE in the at least two MLEs includes a per-STA profile extension subelement, the radio frame receiving apparatus may determine, in step S103, that STA profiles carried in per-STA profile extension subelements and a STA profile carried in a previous adjacent per-STA profile carry the station information of the same link. Further, the station may concatenate the per-STA profile subelements in a sequence in which the per-STA profile subelements appear in the radio frame, to obtain the station information of the same link.

In an implementation, when the target information includes the first indication information, the radio frame receiving apparatus receives the radio frame in step S102. If the radio frame includes at least two MLEs, the radio frame receiving apparatus determines, based on the first indication information of per-STA profile subelements of the at least two MLEs, whether station information, carried in the per-STA profile subelement, of a link is fragmented. If the station information, carried in the per-STA profile subelement, of the link is fragmented, the radio frame receiving apparatus concatenates, in step S103, fields of STA profiles carried in a next per-STA profile subelement (or next per-STA profile subelements) in a sequence in which per-STA profile subelements appear in the radio frame, to obtain the station information of the same link.

In an implementation, when the target information includes the second indication information, the radio frame receiving apparatus receives the radio frame in step S102. If the radio frame includes at least two MLEs, the radio frame receiving apparatus determines, based on the second indication information of per-STA profile subelements of the at least two MLEs, a quantity of per-STA profiles that carry station information, carried in the per-STA profile subelement, of a link. In addition, in step S103, the radio frame receiving apparatus concatenates, based on the quantity of per-STA profiles indicated by the second indication information, fields of STA profiles carried in a next per-STA profile subelement (or next per-STA profile subelements) in a sequence in which the per-STA profile subelements appear in the radio frame, to obtain the station information of the same link.

In an implementation, when the target information includes the third indication information, the radio frame receiving apparatus receives the radio frame in step S102. If the radio frame includes at least two MLEs, the radio frame receiving apparatus determines, based on the third indication information of per-STA profile subelements of the at least two MLEs, that the per-STA profile subelement is a last per-STA profile in a plurality of per-STA profiles that carry station information of a link. In addition, the radio frame receiving apparatus concatenates, in step S103 based on the third indication information, fields of STA profiles carried in a previous per-STA profile subelement (or a plurality of previous per-STA profile subelements) before the per-STA profile subelement in a sequence in which per-STA profile subelements appear in the radio frame, to obtain the station information of the same link.

According to the technical solutions, when a length of station information, carried in a single MLE, of the multi-link device is greater than a maximum length configured by the MLE, the radio frame fails to be transmitted because the station information of the multi-link device cannot be carried. For example, a length of the length field of the MLE shown in FIG. 3 is 8 bits, to indicate a length of 0 to 255 bytes. However, a length of information that needs to be carried by the MLE may exceed 255 bytes. Consequently, only one MLE is insufficient to carry the information about the multi-link device. For another example, a length of the length field of the per-STA profile shown in FIG. 3 is 8 bits, so that the data part can carry a maximum of 255 octets. However, station information of each link may be longer than 255 octets. Consequently, only one per-STA profile is insufficient to carry the station information of each link. According to the embodiments in FIG. 5 to FIG. 9b, the radio frame sent or received by the multi-link device includes the first MLE and the second MLE, and the first information element included in the first MLE and the second information element included in the second MLE correspond to the station information of the same link. Therefore, station information of a multi-link station device may be carried in a manner in which a plurality of MLEs of a radio frame carry station information of a same link. This can ensure that the data part of the per-STA profile does not exceed 255 bytes, ensure that a length of content carried in the MLE does not exceed 255 bytes, avoid a radio frame transmission failure, and improve communication efficiency.

The foregoing describes this application from the perspective of methods, and the following further describes this application from the perspective of apparatuses.

FIG. 10 is a schematic diagram of a communication apparatus 1000 according to an embodiment of this application. The communication apparatus 1000 includes a processing unit 1001 and a transceiver unit 1002.

Specifically, the communication apparatus 1000 may specifically be a radio frame sending apparatus, configured to implement the radio frame sending method in any one of the foregoing embodiments. Correspondingly, the processing unit 1001 and the transceiver unit 1002 may be configured to perform the following processes.

The processing unit 1001 is configured to generate a radio frame. The radio frame includes a first multi-link element MLE and a second MLE, the first MLE includes a first information element, the second MLE includes a second information element, and the first information element and the second information element correspond to station information of a same link. The transceiver unit 1002 is configured to send the radio frame.

According to the technical solutions, when a length of station information, carried in a single MLE, of a multi-link device is greater than a maximum length configured by the MLE, the radio frame fails to be transmitted because the station information of the multi-link device cannot be carried. For example, a length of the length field of the MLE shown in FIG. 3 is 8 bits, to indicate a length of 0 to 255 bytes. However, a length of information that needs to be carried by the MLE may exceed 255 bytes. Consequently, only one MLE is insufficient to carry the information about the multi-link device. For another example, a length of the length field of the per-STA profile shown in FIG. 3 is 8 bits, so that the data part can carry a maximum of 255 octets. However, station information of each link may be longer than 255 octets. Consequently, only one per-STA profile is insufficient to carry the station information of each link. In the embodiment shown in FIG. 10, the radio frame sent by the transceiver unit 1002 includes the first MLE and the second MLE, and the first information element included in the first MLE and the second information element included in the second MLE correspond to the station information of the same link. Therefore, station information of a multi-link station device may be carried in a manner in which a plurality of MLEs of a radio frame carry station information of a same link. This can ensure that the data part of the per-STA profile does not exceed 255 bytes, ensure that a length of content carried in the MLE does not exceed 255 bytes, avoid a radio frame transmission failure, and improve communication efficiency.

In addition, the communication apparatus 1000 may specifically be a radio frame sending apparatus, configured to implement the radio frame sending method in any one of the foregoing embodiments. Correspondingly, the processing unit 1001 and the transceiver unit 1002 may be configured to perform the following processes.

The transceiver unit 1002 is configured to receive a radio frame. The radio frame includes a first multi-link element MLE and a second MLE, the first MLE includes a first information element, the second MLE includes a second information element, and the first information element and the second information element correspond to station information of a same link. The processing unit 1001 is configured to determine the station information based on the radio frame.

According to the technical solutions, when a length of station information, carried in a single MLE, of a multi-link device is greater than a maximum length configured by the MLE, the radio frame fails to be transmitted because the station information of the multi-link device cannot be carried. For example, a length of the length field of the MLE shown in FIG. 3 is 8 bits, to indicate a length of 0 to 255 bytes. However, a length of information that needs to be carried by the MLE may exceed 255 bytes. Consequently, only one MLE is insufficient to carry the information about the multi-link device. For another example, a length of the length field of the per-STA profile shown in FIG. 3 is 8 bits, so that the data part can carry a maximum of 255 octets. However, station information of each link may be longer than 255 octets. Consequently, only one per-STA profile is insufficient to carry the station information of each link. In the embodiment shown in FIG. 10, the radio frame received by the transceiver unit 1002 includes the first MLE and the second MLE, and the first information element included in the first MLE and the second information element included in the second MLE correspond to the station information of the same link. Therefore, station information of a multi-link station device may be carried in a manner in which a plurality of MLEs of a radio frame carry station information of a same link. This can ensure that the data part of the per-STA profile does not exceed 255 bytes, ensure that a length of content carried in the MLE does not exceed 255 bytes, avoid a radio frame transmission failure, and improve communication efficiency.

In addition, the MLE (the first MLE or the second MLE) or the information element (the first information element or the second information element) included in the radio frame transmitted (received or sent) by the communication apparatus shown in FIG. 10 may further be optimized, which is specifically as follows:

In a possible implementation, the first information element and the second information element each include a link identifier (Link ID) field, and a value of the link identifier field of the first information element is the same as a value of the link identifier field of the second information element.

In a possible implementation, the first information element includes first indication information, and the first indication information indicates whether the station information is fragmented.

Optionally, the second information element includes the first indication information.

Optionally, the first indication information indicates whether the station information is fragmented.

Optionally, the first indication information indicates whether different fragments of the station information are carried in different information elements.

Optionally, the first indication information indicates that the station information is fragmented, and the station information of the first information element is a first fragment.

Optionally, the first indication information indicates that the station information is fragmented, and the station information of the first information element is a last fragment.

Optionally, the first indication information indicates that the station information is fragmented, and the station information of the first information element is an intermediate fragment (neither the first fragment nor the last fragment).

Optionally, the first indication information indicates that the station information is not fragmented.

In a possible implementation, the first indication information is carried in a station control (STA control) information field of the first information element.

In a possible implementation, the first information element includes second indication information, and the second indication information indicates a quantity of information elements that carry the station information.

Optionally, the second information element includes the second indication information.

Optionally, the second indication information indicates a quantity of fragments of the station information.

Optionally, the second indication information indicates a quantity of information elements that carry the station information, and the information elements that carry the station information include the first information element.

Optionally, the second indication information indicates a quantity of information elements that carry the station information, and the information elements that carry the station information do not include the first information element.

Optionally, the second indication information indicates a sequence number of the information element that carries the station information, and the sequence number is a forward sequence number.

Optionally, the second indication information indicates a sequence number of the information element that carries the station information, and the sequence number is a backward sequence number.

In a possible implementation, the second indication information is carried in a station control field of the first information element.

In a possible implementation, the second information element includes third indication information, and the third indication information indicates that the second information element is a last information element in the plurality of information elements that carry the station information.

Optionally, the third indication information indicates that there is no other information element that carries the station information after the second information element.

Optionally, the station information is fragmented into a plurality of fragments, and the third indication information indicates that a fragment, carried in the second information element, of the station information is a last fragment.

Optionally, the third indication information includes a non-inheritance field (non-inheritance element).

In a possible implementation, the first information element and the second information element each include a complete profile (Complete Profile) field, and a value of the complete profile field of the first information element is the same as a value of the complete profile field of the second information element.

Optionally, the second information element does not include the complete profile field.

In a possible implementation, the first information element includes a station information (STA Info) field, and the station information field indicates related station information of the first information element and related station information of the second information element.

In a possible implementation, the second information element does not include a station information field; or the second information element includes the station information field, and a value of the station information field is a reserved (reserved) value.

Optionally, the second information element includes a station information field.

In a possible implementation, the station information field includes at least one of the following: a medium access control address present (medium access control address present, MAC Address Present) field, a beacon interval present (Beacon Interval Present) field, a delivery traffic indication message information present (delivery traffic indication message information present, DTIM Info Present) field, and an NSTR link pair present field.

In a possible implementation, an element type of the first information element is the same as an element type of the second information element.

Optional, the first information element and the second information element each include a type field, and a value of the type field of the first information element is the same as a value of the type field of the second information element.

Optionally, the type field is a subelement identifier (Subelement ID) field.

In a possible implementation, an element type of the first information element is different from an element type of the second information element.

In a possible implementation, the first information element and the second information element each include a type field, and a value of the type field of the first information element is different from a value of the type field of the second information element.

Optionally, the type field is a subelement identifier (Subelement ID) field.

In a possible implementation, in the radio frame, the first MLE and the second MLE are adj acent MLEs.

Optionally, in the radio frame, there is no other MLE between the first MLE and the second MLE.

Optionally, in the radio frame, the first MLE is located before the second MLE, or in the radio frame, the second MLE is located after the first MLE.

In a possible implementation, the first MLE includes a common information field, and the common information field indicates multi-link common information of the first MLE and multi-link common information of the second MLE.

In a possible implementation, the second MLE does not include a common information field; or the second MLE includes the common information field, and a value of the common information field of the second MLE is a reserved value.

Optionally, the second information element includes a common information field.

In a possible implementation, the first MLE includes a multi-link control field, and the multi-link control field indicates multi-link control information of the first MLE and multi-link control information of the second MLE.

In a possible implementation, the second MLE does not include a multi-link control field; or the second MLE includes the multi-link control field, and a value of a presence bitmap (Presence bitmap) field in the multi-link control field of the second MLE is all 0s.

Optionally, the second information element includes a common information field.

In a possible implementation, the radio frame is an association request frame, a reassociation request frame, an association response frame, a reassociation response frame, or a probe response frame.

It should be noted that the communication apparatus 1000 may further be configured to perform the foregoing other embodiments in FIG. 1 to FIG. 9 and achieve corresponding advantageous effects. For details, refer to the descriptions in the foregoing embodiments. Details are not described herein again.

FIG. 11 is a schematic diagram of a structure of a communication apparatus 1100 according to an embodiment of this application. The communication apparatus 1100 includes a processor 1101 and a transceiver 1102.

The communication apparatus 1100 may be a radio frame sending apparatus, a radio frame receiving apparatus, or a chip in a radio frame sending apparatus or a radio frame receiving apparatus.

FIG. 11 shows only main components of the communication apparatus 1100. In addition to the processor 1101 and the transceiver 1102, the communication apparatus may further include a memory 1103 and an input/output apparatus (not shown in the figure).

The processor 1101 is mainly configured to: process a communication protocol and communication data, control the entire communication apparatus, execute a software program, and process data of the software program. The memory 1103 is mainly configured to store the software program and the data. The transceiver 1102 may include a radio frequency circuit and an antenna. The radio frequency circuit is mainly configured to perform conversion between a baseband signal and a radio frequency signal and process a radio frequency signal. The antenna is mainly configured to transmit and receive a radio frequency signal in a form of an electromagnetic wave. The input/output apparatus, such as a touchscreen, a display, or a keyboard, is mainly configured to: receive data input by a user and output data to the user.

The processor 1101, the transceiver 1102, and the memory 1103 may be connected through a communication bus.

After the communication apparatus is powered on, the processor 1101 may read the software program in the memory 1103, interpret and execute instructions of the software program, and process data of the software program. When data needs to be sent in a wireless manner, the processor 1101 performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 1101. The processor 1101 converts the baseband signal into data, and processes the data.

In any one of the foregoing designs, the processor 1101 may include a communication interface for implementing receiving and sending functions. For example, the communication interface may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1101 may store instructions. The instructions may be a computer program. The computer program is run on the processor 1101, so that the communication apparatus 1100 can perform the method described in any one of the foregoing embodiments. The computer program may be fixed in the processor 1101, and in this case, the processor 1101 may be implemented by hardware.

In an implementation, the communication apparatus 1100 may include a circuit, and the circuit may implement a sending, receiving, or communication function in any one of the foregoing embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may be manufactured using various IC technologies, for example, a complementary metal oxide semiconductor (complementary metal oxide semiconductor, CMOS), an N-type metal oxide semiconductor (N-type Metal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus may be an independent device or may be a part of a large device. For example, the communication apparatus may be:
(1) an independent integrated circuit IC, a chip, or a chip system or subsystem;
(2) a set of one or more ICs, where optionally, the IC set may also include a storage component configured to store data and instructions;
(3) an ASIC, for example a modem (Modem);
(4) a module that can be embedded in another device;
(5) a receiver, an intelligent terminal, a wireless device, a handheld device, a mobile unit, a vehicle-mounted device, a cloud device, an artificial intelligence device, and the like; and
(6) another device or the like.

In addition, the processor 1101 may be configured to perform, for example but not limited to, baseband related processing; and the transceiver 1102 may be configured to perform, for example but not limited to, radio frequency receiving and sending. The foregoing components may be separately disposed on chips independent of each other, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to a geometric processor and a multimedia processor). The chip may be referred to as a system on chip (system on chip). Whether components are independently disposed on different chips or are integrated and disposed on one or more chips usually depends on specific requirements of a product design. Specific implementation forms of the foregoing components are not limited in embodiments of the present invention.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a WLAN communication system, including a radio frame sending apparatus and a radio frame receiving apparatus. The radio frame sending apparatus and the radio frame receiving apparatus may perform the method in any one of the foregoing embodiments.

Methods or algorithm steps described in combination with the content disclosed in this application may be implemented by hardware, or may be implemented by a processor by executing a software instruction. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to the processor, to enable the processor to read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose computer or a special-purpose computer.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

In the foregoing specific implementations, the objectives, technical solutions, and advantageous effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A radio frame sending method, comprising:
generating a radio frame, wherein the radio frame comprises a first multi-link element MLE and a second MLE, the first MLE comprises a first information element, the second MLE comprises a second information element, and the first information element and the second information element correspond to station information of a same link; and
sending the radio frame.

2. A radio frame receiving method, comprising:
receiving a radio frame, wherein the radio frame comprises a first multi-link element MLE and a second MLE, the first MLE comprises a first information element, the second MLE comprises a second information element, and the first information element and the second information element correspond to station information of a same link; and
determining the station information based on the radio frame.

3. The method according to claim 1 or 2, wherein the first information element and the second information element each comprise a link identifier field, and a value of the link identifier field of the first information element is the same as a value of the link identifier field of the second information element.

4. The method according to any one of claims 1 to 3, wherein the first information element comprises first indication information, and the first indication information indicates whether the station information is fragmented.

5. The method according to claim 4, wherein the first indication information is carried in a station control field of the first information element.

6. The method according to any one of claims 1 to 5, wherein the first information element comprises second indication information, and the second indication information indicates a quantity of information elements that carry the station information.

7. The method according to claim 6, wherein the second indication information is carried in the station control field of the first information element.

8. The method according to any one of claims 1 to 7, wherein the second information element comprises third indication information, and the third indication information indicates that the second information element is a last information element in a plurality of information elements that carry the station information.

9. The method according to any one of claims 1 to 8, wherein
the second information element does not comprise a station information field; or
the second information element comprises the station information field, and a value of the station information field is a reserved value.

10. The method according to any one of claims 1 to 9, wherein an element type of the first information element is the same as an element type of the second information element.

11. The method according to any one of claims 1 to 10, wherein the element type of the first information element is different from the element type of the second information element.

12. The method according to claim 11, wherein the first information element and the second information element each comprise a type field, and a value of the type field of the first information element is different from a value of the type field of the second information element.

13. The method according to claim 12, wherein the type field is a subelement identifier field.

14. The method according to any one of claims 1 to 13, wherein in the radio frame, the first MLE and the second MLE are adjacent MLEs.

15. The method according to any one of claims 1 to 14, wherein
the second MLE does not comprise a common information field;
the second MLE comprises the common information field, and a value of the common information field of the second MLE is a reserved value;
the second MLE does not comprise a multi-link control field; or
the second MLE comprises the multi-link control field, and a value of a status bitmap field in the multi-link control field of the second MLE is all 0s.

16. A radio frame sending apparatus, wherein the apparatus comprises a transceiver unit and a processing unit, and the apparatus is configured to perform the method according to any one of claim 1 and claims 3 to 15.

17. A radio frame receiving apparatus, wherein the apparatus comprises a transceiver unit and a processing unit, and the apparatus is configured to perform the method according to any one of claims 2 to 15.

18. A communication apparatus, comprising at least one processor coupled to a memory, wherein
the memory is configured to store a program or instructions; and
the at least one processor is configured to execute the program or the instructions, to enable the apparatus to implement the method according to any one of claims 1 to 15.

19. A computer program product comprising program instructions, wherein when the program instructions are run on a computer, the computer is enabled to perform the method according to any one of claims 1 to 15.

20. A computer-readable storage medium, wherein the computer-readable storage medium stores program instructions, and when the program instructions are run, the method according to any one of claims 1 to 15 is performed.
